# EUROPÄISCHE PATENTSCHRIFT

(11) **EP 3 364 549 B1**
(45) Veröffentlichungstag und Bekanntmachung des Hinweises auf die Patenterteilung: **29.07.2020**
(21) Anmeldenummer: 17157153.2
(22) Anmeldetag: 21.02.2017
(51) Int. Cl.: H04B 3/54

(54) **VERFAHREN UND SYSTEM ZUR DATENÜBERTRAGUNG ÜBER EINE HOCH- ODER MITTELSPANNUNGSLEITUNG**
METHOD AND SYSTEM FOR DATA TRANSMISSION OVER A HIGH OR MEDIUM VOLTAGE LINE
PROCÉDÉ ET SYSTÈME POUR LA TRANSMISSION DE DONNÉES SUR UNE LIGNE DE MOYEN TENSION OU HAUTE TENSION

(43) Veröffentlichungstag der Anmeldung: 22.08.2018
(73) Patentinhaber: Siemens Aktiengesellschaft, 80333 München (DE)
(72) Erfinder: KUSSYK, Jaroslaw, 1170 Wien (AT)

(56) Entgegenhaltungen:
- US-A1- 2013 171 999
- US-A1- 2014 169 186

## Beschreibung

Die Erfindung betrifft ein Verfahren zur Datenübertragung über eine Hoch- oder Mittelspannungsleitung gemäß dem Oberbegriff des Anspruchs 1 sowie ein entsprechendes System gemäß Anspruch 11.

In einem Kommunikationsnetzwerk mit mehreren Teilstrecken (ein sog. "multihop network"), in dem ein Übertragungsmedium von mehreren Netzwerkstationen/-knoten z.B. für eine Signalübertragung über ein elektrisches Energieversorgungsnetz oder mittels Funkwellen gemeinsam genutzt wird, kann es zu einem sogenannten "Exposed-Station-Problem" kommen. Das Exposed-Station-Problem entsteht dann, wenn beispielsweise ein erster Netzwerkknoten bzw. eine erste Netzwerkstation an einen zweiten Netzwerkknoten sendet und ein dritter Knoten das Senden des ersten Netzwerkknotens erkennt. Der dritte Netzwerkknoten wird dadurch vom Senden auf dem gleichen Übertagungskanal an einen vierten Netzwertknoten abgehalten, auch wenn der zweite Netzwerkknoten nicht in der Reichweile des dritten Netzwercknotens ist.

Ein Netzwerkknoten weist dabei einen Sender, einen Empfänger (zusammen als Transceiver bezeichnet) und einen Netzwerkcontroller auf, der über eine Nutzerschnittstelle Nachrichten mit Nutzern des Netzwerkknotens und/oder anderen Netzwerkknoten austauscht. Zusätzlich kann der Netzwerkcontroller die empfangenen Nachrichten über den Sender oder die Nutzerschnittstelle an weitere Netzwerkknoten weiterleiten. In einem Netzwerk mit dynamischer Frequenzkanalnutzung werden die Frequenzkanäle für eine Kommunikation zwischen mindestens zwei Netzwerkknoten dynamisch durch die Knoten gewählt. In einem solchen räumlich verteilten Kommunikationsnetzwerk kann es zu dem oben genannten Problem kommen, wenn die vier Netzwerkknoten bzw. weitere Netzwerkknoten denselben Frequenzkanal für ihre Signalübertragung verwenden. Auch ein sog. Übersprechen, d.h. eine induktive Einkoppelung von Signalen zwischen verschiedenen Leitern für unterschiedliche Phasen einer Freileitung kann dazu führen, dass ein gleicher Frequenzkanal benutzt wird und das Exposed-Station-Problem auftritt.

Bei der Signalübertragung kann es sich um mindestens eine der beiden Übertragungsrichtungen einer Duplexverbindung handeln. Bei der sog. Trägerfrequenz-Nachrichtenübertragung über Hochspannungsleilungen (TFH) wird üblicherweise eine sog. "frequency division duplex"-Verbindung (FDD) zwischen zwei Netzwerkknoten bzw. TFH-Vorrichtungen aufgebaut. Der TFH steht ein relativ schmaler Frequenzbereich von ca. 30kHz bis 500kHz (in manchen Regionen sogar bis 1 MHz) zur Verfügung. Auch in der Funktechnik sind die Frequenzressourcen meistens knapp bemessen.

Für die FDD-Verbindungen mehrerer Netzwerkknotenpaare werden in der Regel verschiedene Frequenzkanäle verwendet. Allerdings können die gleichen Frequenzkanale bei ausreichend voneinander entfernten TFH-Vorrichtungen für zumindest eine der beiden Senderichtungen wiederverwendet werden, weil die Störbeeinflussung bei größeren Abständen der Vorrichtungen voneinander sehr klein wird.

Bisher werden häufig Vielfachzugriffsverfahren mit Abtasten des Trägers, also der verschiedenen Frequenzkanäle, eingesetzt. Kollisionen können vermieden werden (sog. CSMA/CA Verfahren) und kontrollierte Sendeverfahren wie z.B. ein "request to send" (RTS)/"clear to send" (CTS)- Mechanismus können das Exposed-Station-Problem vermindern. Allerdings ist diese Technik in einem Netzwerk, das aus mehreren FDD-Verbindungen besteht, die eine kontinuierliche bidirektionale Signalübertragung erfordern, nicht einsetzbar. In der bisherigen Praxis werden im Zuge einer Raum-Frequenzplanung den verschiedenen FDD-Verbindungen jeweils verschiedene Frequenzkanäle bzw. Frequenzkanalpaare mit fixer Bandbreite zugeordnet. Die einzelnen Frequenzkanäle werden zumindest für eine der beiden Senderichtungen einer weiteren FDD-Verbindung mit einer gewissen räumlichen Reserve zugeteilt, d.h. es wird auf einen Mindestabstand der Vorrichtungen geachtet.

Aus dem Dokument US 2013/0171999 A1 ist ein Verfahren zur dynamischen Wiederverwendung von Übertragungskanälen in einem Kommunikationssystem bekannt, bei welchem mehrere Senderstationen auf einen Übertragungskanal bzw. ein Übertragungsmedium zugreifen können. Dabei wird einerseits ein Prioritätssymbol bei zu versendeten Daten mitgesendet, welches eine Dringlichkeit der zu versendenden Daten angibt. Andererseits werden bei einem Datenpaket Steuerinformation (z.B. Dauer einer Übertragung des jeweiligen Datenpakets) mitgesendet, anhand welcher eine weitere Senderstation ihren Zugriffsversuch auf den Übertragungskanal verzögern kann.

Das Dokument US 2014/0169186 A1 beschreibt einen Mechanismus zur adaptiven Wiederverwendung eines Übertragungskanals, wobei in einem lokalen Kommunikationsnetz eine Einheit vorgesehen ist, von welcher eine Leistungsfähigkeit eines Übertragungskanals im lokalen Kommunikationsnetz sowie in einem benachbarten Kommunikationsnetz - insbesondere anhand einer Signalstärke von zwischen Netzknoten übertragenen Signalen - bestimmt werden kann.

Aus der bisher unveröffentlichten europäischen Patentanmeldung Nr. 17157143.3 ist ferner ein Verfahren zur Datenübertragung über eine Hoch- oder Mittelspannungsleitung bekannt, bei dem ein Schutzsignal-Frequenzkanal für die Übertragung eines Schutzsignals reserviert ist, und primäre Frequenzkanäle zur Datenübertagung verwendet werden, wobei der Schutzsignal-Frequenzkanal zusätzlich zur Übertragung von Zusatzdaten genutzt wird. Aus der bisher unveröffentlichten europäischen Patentanmeldung Nr. 17157147.4 ist eine Weiterbildung des Verfahrens zur Vermeidung des sog. "hidden-station-problems" bekannt.

Ausgehend von bekannten Verfahren zur Datenübertragung über eine Hoch- oder Mittelspannungsleitung stellt sich an die Erfindung die Aufgabe, ein Verfahren anzugeben, mit dem eine vergleichsweise höhere Datenübertragungsrate erreicht werden kann.

Die Erfindung löst diese Aufgabe durch ein Verfahren gemäß Anspruch 1.

Das erfindungsgemäße Verfahren hat den Vorteil, das sog. Exposed-Station-Problem zu vermeiden. Durch eine Nutzung sekundärer Übertragungskanäle wird nur ein relativ geringer Anteil der zur Verfügung stehenden Frequenz- und/oder Zeitressourcen eingesetzt. Das Verfahren ermöglicht den Aufbau eines adaptiven zellularen Netzwerks mit einer dynamischen Frequenzkanalnutzung und damit eine bessere Ausnutzung der zur Verfügung stehenden Frequenzressourcen, wodurch ein höherer Datendurchsatz beispielsweise in einem TFH-Gesamtsystem erzielt werden kann.

Im Vergleich zum bisherigen Ansatz in der TFH-Technik führt der erfindungsgemäße Ansatz zu einer verbesserten Ausnutzung des zur Verfügung stehenden Frequenzbereichs. Bisher wurde in der TFH-Technik eine koordinierte dynamische Wiederverwendung der Frequenzkanäle sowie eine Abstimmung des Sende-/Empfangsverhalten zwischen jenen FDD-Verbindungen, die zumindest teilweise die gleichen Frequenzkanäle nutzen, nicht eingesetzt.

Dabei wird erfindungsgemäß davon ausgegangen, dass jeweils zwei Datenübertragungsvorrichtungen ein Paar ausbilden, das z.B. über eine Phase einer Hochspannungsleitung in Verbindung steht und über mindestens einen primären Frequenzkanal miteinander kommuniziert. Die erste und die zweite Datenübertagungsvorrichtung bilden ein Paar. Auch die dritte und eine vierte Datenübertragungsvorrichtung bilden ein Paar. Ein Paar von Datenübertragungsvorrichtungen kommuniziert die jeweils benutzten primären Frequenzkanäle ausschließlich über mindestens einen sekundären Frequenzkanal an ein anderes Paar.

Die Signalstärke kann beispielsweise anhand eines Signal-zu-Rauschen Verhältnis (SNR) bestimmt werden, das am Eingang eines Empfängers gemessen wird. Alternativ kann auch eine mittlere oder eine maximale Signalamplitude bzw. Signalpegel zur Bestimmung der Signalstärke herangezogen werden.

Der erste Schwellenwert wird derart festgelegt, dass keine Störung eines anderen Paares aus Sender und Empfänger zu erwarten ist, wenn der betreffende wiederverwendet wird. Eine geeignete Festsetzung des ersten Schwellenwertes berücksichtigt dabei insbesondere die Frequenzabhängigkeit der Datenübertragung, also z.B. dass auf dem Übertragungsweg manche Frequenzen stärker gedämpft werden als andere. Auch die technischen Eigenschaften einer Datenübertragungsvorrichtung können eine Frequenzabhängigkeit der Signalübertragung bewirken.

Besonders bevorzugt kann das erfindungsgemäße Verfahren als Weiterbildung der in der eingangs genannten europäischen Patentanmeldung Nr. 17157143.3 dargestellten Verfahrens eingesetzt werden.

Weiterhin empfängt die dritte Datenübertragungs-vorrichtung eine weitere Frequenzkanal-Belegungsinformation auf einem weiteren sekundären Frequenzkanal, wobei die beiden Frequenzkanal-Belegungsinformationen jeweils von der ersten oder der zweiten Datenübertragungsvorrichtung gesendet wer-den, und diesen primären Frequenzkanal für die eigene Verwendung freigibt, wenn die Signalstärke der Datenüber-tragung auf dem weiteren sekundären Frequenzkanal einen zweiten vorher festgelegten Schwellenwert unterschrei-tet. Dies ist ein Vorteil, weil so die Zuverlässigkeit der Übermittlung der Belegungsinformation gesteigert wird. Der zweite Schwellenwert kann da-bei gleich dem ersten Schwellen-wert sein oder z.B. aufgrund einer bekannten Frequenzab-hängigkeit der Signalübertragung oder unterschiedlicher Sende-pegel der unterschiedlichen Kanäle für den weiteren sekundären Frequenzkanal verschieden festgesetzt sein.

In einer bevorzugten Ausführungsform des erfindungsgemäßen Verfahrens weist jede der beiden Frequenzkanal-Belegungsinformationen zusätzlich zu der Information über die Belegung des von der aussendenden Datenübertragungsvorrichtung verwendeten primären Frequenzkanals eine Frequenzkanal-Belegungsinformationen über den von der jeweiligen Partnervorrichtung verwendeten primären Frequenzkanal auf, so dass auch bei einer Störung des Empfangs einer der beiden sekundären Frequenzkanäle bei der dritten Datenübertragungsvorrichtung die dritte Datenübertragungsvorrichtung eine Belegungsinformation über alle von der ersten und der zweiten Datenübertragungsvorrichtung verwendeten primären Frequenzkanäle erhält. Dies ist ein Vorteil, weil auf diese Weise sicher gestellt wird, dass auch bei fehlerhafter Übertragung oder schlechtem Empfang einer der beiden sekundären Frequenzkanäle, die von dem Paar erste und zweite Datenübertragungsvorrichtung benutzt werden, um mit anderen Paaren zu kommunizieren, eine vollständige Mitteilung der verwendeten primären Frequenzkanäle an das andere Paar erfolgt. Mit anderen Worten ausgedrückt "spiegeln" die beiden Datenübertragungsvorrichtungen eines Paares jeweils die Belegungs-Informationen, die die jeweils andere Datenübertragungsvorrichtung auf ihrem sekundären Frequenzkanal überträgt, auf dem eigenen sekundären Frequenzkanal. Weiterhin werden bevorzugt auch die jeweiligen Signalstärken des Empfangs der Kanäle mitgeteilt, also wird z.B. die zweite Datenübertragungsvorrichtung auf ihrem sekundären Frequenzkanal mitteilen, welche primären und sekundären Frequenzkanäle von diesem Paar verwendet werden und mit welcher Signalstärke die beiden sekundären Frequenzkanäle beim jeweils anderen Partner empfangen wurden.

In einer bevorzugten Ausführungsform des erfindungsgemäßen Verfahrens sendet die dritte Datenübertragungsvorrichtung eine Belegungsinformation auf einem weiteren sekundären Frequenzkanal aus, der von der zweiten Datenübertragungsvorrichtung empfangen wird, und dass die zweite Datenübertragungsvorrichtung die Signalstärke der Belegungsinformation auf dem weiteren sekundären Frequenzkanal ermittelt und auf einem sekundären Frequenzkanal an die dritte Datenübertragungsvorrichtung zurück meldet, so dass die dritte Datenübertragungsvorrichtung den von der ersten und der zweiten Datenübertragungsvorrichtung verwendeten primären Frequenzkanal für die eigene Verwendung freigibt, wenn die Signalstärke der von der dritten Datenübertragungsvorrichtung gesendeten Belegungsinformation einen dritten vorher festgelegten Schwellenwert unterschreitet. Der dritte Schwellenwert kann dabei gleich dem ersten und/oder zweiten Schwellenwert sein oder z.B. aufgrund einer bekannten Frequenzabhängigkeit der Signalübertragung für den weiteren sekundären Frequenzkanal verschieden festgesetzt sein.

In einer bevorzugten Ausführungsform des erfindungsgemäßen Verfahrens bilden die erste und die zweite Datenübertragungsvorrichtung ein erstes Paar und die dritte und eine vierte Datenübertragungsvorrichtung ein zweites Paar aus, wobei das zweite Paar die von dem ersten Paar genutzten primären Frequenzkanäle für die eigene Verwendung freigibt, wenn die Signalstärke der von dem ersten Paar gesendeten Belegungsinformationen beim Empfang sowohl bei der dritten als auch bei der vierten Datenübertragungsvorrichtung einen vorher festgelegten vierten Schwellenwert unterschreitet. Der dritte Schwellenwert kann dabei gleich dem ersten und/oder zweiten und/oder dritten Schwellenwert sein oder z.B. aufgrund einer bekannten Frequenzabhängigkeit der Signalübertragung für den weiteren sekundären Frequenzkanal verschieden festgesetzt sein.

In einer bevorzugten Ausführungsform des erfindungsgemäßen Verfahrens wird der sekundäre Frequenzkanal mit einer höheren Sendeleistung als der jeweiligen Sendeleistung der primären Frequenzkanäle betrieben wird. Dies hat den Vorteil, dass eine höhere Reichweite durch die größere Sendeleistung erreicht wird.

In einer bevorzugten Ausführungsform des erfindungsgemäßen Verfahrens wird der sekundäre Frequenzkanal mit einem anderen Übertragungsverfahren als die primären Frequenzkanäle betrieben, das eine größere Reichweite der Signalübertragung im sekundären Frequenzkanal bewirkt.

In einer bevorzugten Ausführungsform des erfindungsgemäßen Verfahrens wird für den sekundären Frequenzkanal als Datenübertragungsmethode frequency shift keying eingesetzt. Dies hat den Vorteil, dass eine höhere Reichweite erreicht wird.

In einer bevorzugten Ausführungsform des erfindungsgemäßen Verfahrens wird als sekundärer Frequenzkanal (MB1) ein Schutzsignal-Frequenzkanal verwendet.

In einer bevorzugten Ausführungsform des erfindungsgemäßen Verfahrens werden auf dem sekundären Frequenzkanal (MB1) Zusatzdaten übertragen, die mindestens eine der folgenden Signalempfangsqualitätsinformationen aufweisen: Empfangspegel, Signal-zu-Rauschen Verhältnis, geschätzte Bitfehlerrate.

In einer bevorzugten Ausführungsform des erfindungsgemäßen Verfahrens wird für den Schutzsignal-Frequenzkanal als Datenübertragungsmethode frequency shift keying eingesetzt, wobei Signale außerhalb eines vorher festgelegten Frequenzbereichs als ein Schutzsignal und Signale innerhalb des vorher festgelegten Frequenzbereichs als Zusatzdaten verarbeitet werden.

Ausgehend von bekannten Systemen zur Datenübertragung über eine Hoch- oder Mittelspannungsleitung stellt sich an die Erfindung die Aufgabe, ein System anzugeben, mit dem eine vergleichsweise höhere Datenübertragungsrate erreicht werden kann.

Die Erfindung löst diese Aufgabe durch ein System gemäß Anspruch 11. Bevorzugte Ausführungsformen sind in den Ansprüchen 12 bis 20 angegeben. Es ergeben sich für das erfindungsgemäße System und seine Ausführungsformen sinngemäß die gleichen Vorteile wie eingangs für das erfindungsgemäße Verfahren erläutert.

Im Folgenden soll das erfindungsgemäße Verfahren anhand eines Ausführungsbeispiels und einiger Figuren genauer erläutert werden.

Die Figuren zeigen in schematischer Darstellung:
- Figur 1: ein erstes System mit zwei Paaren von Vorrichtungen zur Datenübertragung, und
- Figur 2: ein erstes Beispiel für eine Frequenzkanalbelegung, und
- Figur 3: ein zweites System mit zwei Paaren von Vorrichtungen zur Datenübertragung, und
- Figur 4: ein zweites Beispiel für eine Frequenzkanalbelegung, und
- Figur 5: ein drittes System mit zwei Paaren von Vorrichtungen zur Datenübertragung, und
- Figur 6: ein drittes Beispiel für eine Frequenzkanalbelegung, und
- Figur 7: ein viertes System mit zwei Paaren von Vorrichtungen zur Datenübertragung, und
- Figur 8: ein viertes Beispiel für eine Frequenzkanalbelegung, und
- Figur 9: ein Prinzipschaltbild eines Systems mit zwei Paaren von Vorrichtungen zur Datenübertragung.

Zur Lösung oder mindestens einer Verringerung des Exposed-Station-Problems wird eine System und ein Verfahren vorgeschlagen, bei denen für eine Koordinierung der Signalübertragung zwischen TFH-Vorrichtungen über die primären Übertragungskanäle zusätzlich sekundäre Übertragungskanäle verwendet werden.

Es werden zwei zusammenhängende Teilproblemlösungen vorgeschlagen von denen die erste Lösung im Folgenden erläutert wird.

Eine Störung des Signalempfangs mit unerwünschter Signalqualitätsminderung des zweiten Netzwerkknotens vom ersten Netzwerkknoten durch den dritten Netzwerkknoten soll vermindert werden.

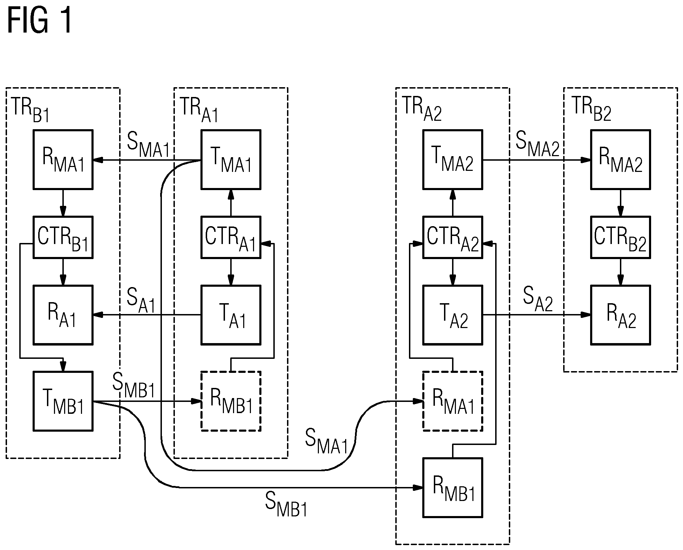

Im ersten Ausführungsbeispiel gemäß Figur 1 werden mindestens drei Netzwerkknoten betrachtet; der erste Netzwerknoten TR_{A1}, der zweite Netzwerknoten TR_{B1}, der dritte Netzwerkknoten TR_{A2} und optional ein weiterer Netzwerkknoten TR_{B2}. Die Netzwercknoten TR_{A1} und TR_{A2} umfassen Sender T_{A1} und T_{A2}, für primäre Übertragungskanäle A1 bzw. A2, Sender T_{MA1} und T_{MA2} für sekundäre Übertragungskanäle MA1 bzw. MA2 und NetzwerkknotenSteuereinrichtungen CTR_{A1} bzw. CTR_{A2}. Zusätzlich enthält der Netzwerkknoten TR_{A1} einen Empfänger RM_{A1}, um das Signal S_{MB1} aus dem sekundären Übertragungskanal MB1 vom Netzwerkknoten TR_{B1} empfangen zu können. Außerdem enthält der Netzwerkknoten TR_{A2} vorzugsweise einen Empfänger RM_{B1} und einen Empfänger R_{MA1}, um das Signal S_{MB1} aus dem sekundären Übertragungskanal MA1 vom Netzwerkknoten T_{RA1} bzw. optional das Signal S_{MA1} aus dem sekundären Übertragungskanal M_{B1} vom Netzwerkknoten TRB1 empfangen zu können. Der Netzwerkknoten TR_{B1} und der optionale Netzwerkknoten TR_{B2} umfassen Empfänger RA1 bzw. RA2 für primäre Übertragungskanäle AI bzw. A2. Weiterhin sind Empfänger R_{MA1} bzw. R_{MA2} für sekundäre Übertragungskanäle MA1 bzw. MA2 und Netzwerkknotensteuereinrichtungen CTR_{B1} bzw. CTR_{B2} vorgesehen. Außerdem enthält der Netzwerkknoten TR_{B1} einen Sender T_{MB1} für die Übertragung des Signal S_{MB1} über den sekundären Übertragungskanal MB1.

Der erste Netzwerkknoten TR_{A1} sendet an den zweiten Netzwercknoten (seinen Partnernetzwerkknoten) TR_{B1} über den primären Übertragungskanal A1 ein Nutzdatensignal S_{A1} und über den sekundären Übertragungskanal MA1 das Signal S_{MA1} aus. Das Nutzdatensignal enthält z.B. Informationen über die Signalübertragung im primären Übertragungskanal A1 und ggf. in weiteren primären Übertragungskanälen wie z.B. B1, A2, B2 und in weiteren sekundären Übertragungskanälen wie z.B. MA1, MB1, MA2, MB2. Der zweite Netzwerkknoten TR_{B1} sendet über den sekundären Übertragungskanal MB1 das Signal S_{MB1} an den ersten Netzwerkknoten TR_{A1} aus, das in gleicher Weise wie S_{MA1} Zusatzinformationen enthält. Auch in weiteren sekundären Übertragungskanälen (insb. MA1, MB1, MA2, MB2 usw.) werden Informationen übermittelt, die insbesondere für den dritten Netzwerkknoten TR_{A2} von Interesse sind. In einer Weiterbildung des Ausführungsbeispiels können die beiden Netzwerkknoten TR_{A1} und TR_{B1} weitere Elemente einer Duplex-Verbindung wie beispielsweise Sender und Empfänger für den primären Übertragungskanal B1 und den sekundären Übertragungskanal MB1 enthalten.

Die Informationen in Signalen, die über die sekundären Übertragungskanäle (z. B. MA1, MB1, MA2, MB2 u. a.) übertragen werden, können die Informationen über die Daten- bzw. Signalübertragung in primären Übertragungskanälen (insb. A1, B1, A2, B2, u. a.) und in sekundären Übertragungskanälen (insb. MA1, MB1, MA2, MB2 usw.) enthalten. Die Informationen über die Daten-/Signalübertragung können beispielsweise sein: untere/obere Grenzfrequenz, Mittenfrequenz, Bandbreite, minimale Bandbreite, Vorzugsmittenfrequenz, Frequenzbandkennung, Sende- und/oder Empfangspegel, diverse Empfangsqualitätsparameter wie z.B. Signal-zu-Rauschen-Verhältnis (SNR), Bit- und/oder Blockfehlerrate, Rauschpegel, Modulations- und/oder Kanalkodierungsart, Meldungsformat, Identifikationsnummer des sendenden Netzwerkknotens, Identifikationsnummer des Partnernetzwerkknotens, Nutz- und Steuerungsdaten, Zeitstempel.

Wenn der Empfänger R_{MB1} des Netzwerkknotens TR_{A2} das Signal SMB1 mit Informationen über eine Daten- /Signalübertragung im primären Übertragungskanal A1 (oder anderen Übertragungskanälen empfängt, erkennt die Netzwerkknotensteuerungseinrichtung CTR_{A2} die Belegung des primären Übertragungskanals A1 durch den Sender TA1 im TR_{A1} bzw. Empfänger R_{A1} im TR_{B1}, und schätzt die Dämpfung des Signals SMB1 zwischen den Netzwerkknoten TR_{B1} und TR_{A2}. Falls erforderlich, weist die Netzwerkknotensteuerungseinrichtung CTR_{A2} den Sender TR_{A2} an, den primären Übertragungskanal A1 nicht zu blockieren bzw. den Empfänger R_{A1} nicht zu stören.

Dies geschieht unter der Annahme, dass aufgrund des vom TR_{B1} mittels des Signals S_{MB1} übermittelten Rauschpegels und SNR an dessen Empfänger R_{A1} und aufgrund der geschätzten Dämpfung des Signals SM_{B1} vom Netzwerkknoten TR_{B1} zum Netzwerkknoten TR_{A2} eine ausreichend gute Abschätzung der Dämpfung des Nutzdatensignals S_{A2} vom Netzwerkknoten TR_{A2} zum Netzwerkknoten TR_{B1} möglich ist. Dann wird eine mögliche Störung des Empfängers R_{A1} durch das gedämpfte Signal S_{A2} vom TR_{A2} festgestellt, insbesondere wenn der Frequenzkanal A2 zumindest teilweise mit dem Frequenzkanal A1 überlappt.

Somit wird der sekundäre Kanal MB1 für die erste Teilproblemlösung des Exposed-Station-Problems verwendet, indem eine unbeabsichtigte Störung des dritten Knotens erkannt und durch Blockieren des betreffenden Kanals beseitigt wird. Im Netzwerkknoten TR_{A2} kann optional auch der Empfänger R_{MA1} verwendet werden, um die Dämpfung des Signals S_{MA1} zwischen den Netzwerkknoten TR_{A1} und TR_{A2} abzuschätzen bzw. diese bei der vorher beschriebenen Einschätzung über eine zumindest teilweise Wiederverwendung der Kanalressourcen im primären Übertragungskanal A1 durch den Sender T_{A2} zu berücksichtigen.

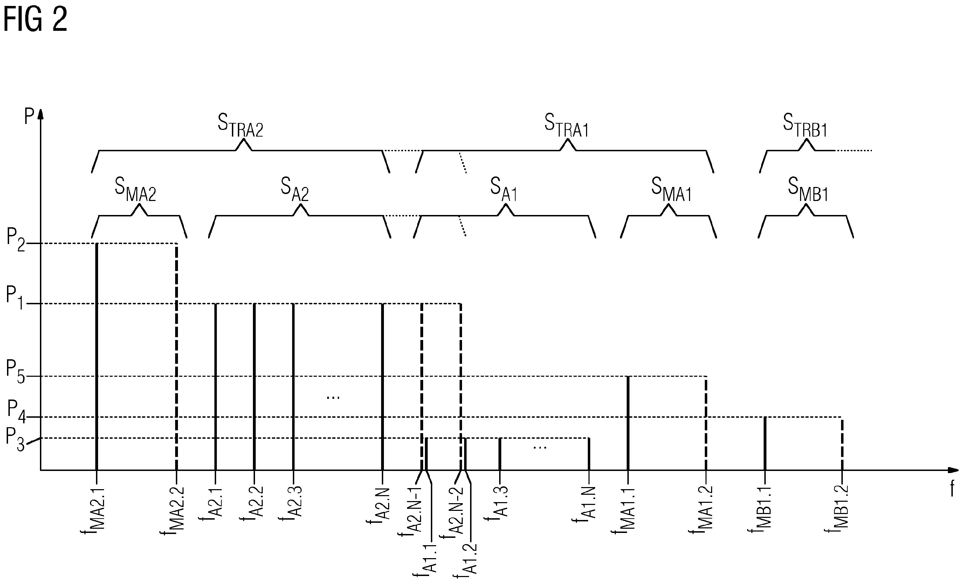

Die Besonderheit dieser Ausführungsform ist darin begründet, dass das Signal S_{MB1} im sekundären Kanal MB1 über eine größere Reichweite (bis zum Netzwerkknoten TR_{A2}) übertragen werden kann als das Signal S_{A2} im primären Kanal A2. Dies kann beispielsweise durch die Verwendung eines robusteren Übertragungsmodus oder durch eine höhere Sendeleistung erzielt werden und soll sicherstellen, dass beispielsweise der Sender T_{A2} den Empfang vom S_{A1} im R_{A1} nicht stört, wenn das Signal S_{MB1} am R_{MB1} des TR_{A2} einen ausreichend niedrigen Pegel erreicht hat, der eine zumindest teilweise Wiederverwendung der Kanalressourcen (Frequenz(subkanäle), Zeit, deren Kombination, CDMA-Code, Senderichtung u. Ä.) des primären Übertragungskanals A1 im Übertragungskanal A2 durch den Netzwerknoten TR_{A2} ermöglicht. Die Fig. 2 zeigt beispielsweise eine Konstellation der Signale S_{A1}, S_{A2}, S_{MA1}, S_{MB1}, und S_{MA2} am Netzwerkknoten TR_{A2}. In den Netzwerkknoten TR_{A1} und TR_{A2} werden die Signale S_{MA1} und S_{MA2} mit einer höheren Leistung P₂ (bzw. einem höheren Pegel) pro Frequenzkanal f_{MA1.1}, f_{MA1.2}, f_{MA2.1} und f_{MA2.2} im Vergleich zu P₁ bei S_{A1} und S_{A2} ausgesendet. Das Signal S_{MB1} in den Frequenzkanälen f_{MA1.1}, f_{MA1.2} weist am Netzwerkknoten TR_{A2} einen Pegel P₄ auf, der zwar niedriger ist als der Pegel P₂ am T_{MB2}, aber ausreichend hoch, um vom R_{MB2} im Netzwerknoten TR_{A2} empfangen werden zu können. Außerdem kann der Pegel P₅ des im TR_{A2} optional empfangenen Signals S_{MA1} mit dessen Pegel am TR_{A1} verglichen werden, der im S_{MB1} an TR_{A2} übermittelt wurde, um die Dämpfung des Signal S_{A2}, zu den Netzwerknoten TR_{A1} und TR_{B1} Netzwerknoten besser abschätzen zu können.

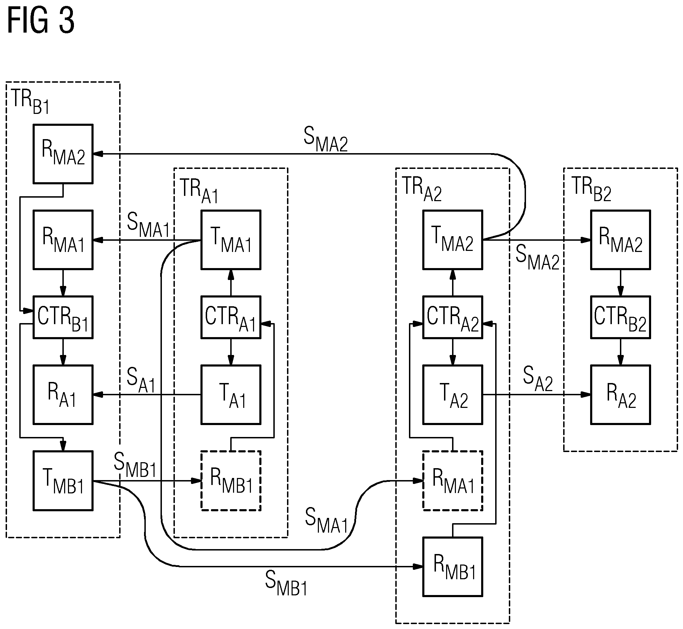

Das zweite alternative Ausführungsbeispiel gemäß Figur 3 basiert auf der Anordnung aus dem ersten Beispiel mit dem Unterschied, dass der zweite Netzwerkknoten TR_{B1} zusätzlich einen Empfänger R_{MA2} enthält, um das Signal S_{MA2} aus dem sekundären Übertragungskanal MA2 vom Netzwerkknoten TR_{A2} empfangen zu können.

Der dritte Netzwerkknoten TR_{A2} sendet vorzugsweise an den weiteren Netzwerkknoten (seinen Partnernetzwerkknoten) TR_{B2} über den primären Übertragungskanal A2 ein Nutzdatensignal S_{A2} und über den sekundären Übertragungskanal MA2 das Signal S_{MA2} aus, das Informationen über die Daten-/Signalübertragung im primären Übertragungskanal A2 und eventuell in weiteren primären Übertragungskanälen (insb. B1, A2, B2) und in weiteren sekundären Übertragungskanälen (insb. MA1, MB1, MA2, MB2 usw.) enthält.

Wenn der Empfänger R_{MA2} des zweiten Netzwerkknotens TR_{B1} das Signal S_{MA2} mit Informationen über Daten-/Signalübertragung im primären Übertragungskanal A2 und anderen Übertragungskanälen empfängt, analysiert die Netzwerkknotensteuerungseinrichtung CTR_{B1} die im S_{MA2} enthaltenen Informationen über die Daten-/Signalübertragung und schätzt die Dämpfung des Signals S_{MA2} vom Netzwerkknoten TR_{A2} zum Netzwerkknoten TR_{B1}. Der zweite Netzwerkknotens TR_{B1} sendet die Dämpfungsinformation zusätzlich zu den Informationen aus dem zweiten Beispiel mittels des Senders T_{MB1} als Signal S_{MB1} aus.

Wenn der Empfänger R_{MB1} des Netzwerkknotens TR_{A2} das Signal S_{MB1} mit Informationen über Daten-/Signalübertragung im primären Übertragungskanal A1 und anderen Übertragungskanälen empfängt, erkennt das Netzwerkknotensteuerungselement CTR_{A2} die Belegung des primären Übertragungskanals A1 durch den Sender T_{A1} im TR_{A1} bzw. Empfänger R_{A1} im TR_{B1}, analysiert die empfangenen Dämpfungsinformationen zwischen den Netzwerkknoten TR_{B1} und TR_{A2}, schätzt optional zusätzlich die Dämpfung des Signals S_{MB1} vom TR_{B1} zum TR_{A2} und weist ggf. den Sender T_{A2} an, den primären Übertragungskanal A1 nicht zu blockieren bzw. den Empfänger R_{A1} nicht zu stören.

Dies unter der Annahme, dass zumindest aufgrund des vom TR_{B1} mittels des Signals S_{MB1} übermittelten Rauschpegels und SNR am dessen Empfänger R_{A1} bzw. des Empfangspegels vom S_{MA2} am R_{MA2} eine ausreichen gute Abschätzung der Dämpfung des Nutzdatensignals S_{A2} vom Netzwerkknoten TR_{A2} zum Netzwerkknoten TR_{B1} bzw. einer mögliche Störung des Empfänger R_{A1} durch das gedämpfte Signal S_{A2} erfolgt. Somit werden die sekundären Kanäle MB1 und MA2 für die erste Teilproblemlösung des Exposed-Station-Problems verwendet. Im Netzwerkknoten TR_{A2} kann optional auch der Empfänger R_{MA1} verwendet werden, um die Dämpfung des Signals S_{MA1} zwischen den Netzwerkknoten TR_{A1} und TR_{A2} abzuschätzen bzw. diese bei der vorher beschriebenen Einschätzung über eine zumindest teilweise Wiederverwendung der Kanalressourcen im primären Übertragungskanal A1 durch den T_{A2} zu berücksichtigen.

Eine zusätzliche Besonderheit bei dieser Ausführung zu der bereits beschriebenen Variante besteht darin, dass das Signal S_{MA2} im sekundären Kanal MA2 über eine größere Reichweite (bis zum Netzwerkknoten TR_{B1}) übertragen werden kann als das Signal S_{A2} im primären Kanal A2. Dies kann beispielsweise durch die Verwendung eines robusteren Übertragungsmodus oder durch eine höhere Sendeleistung erzielt werden und soll sicherstellen, dass beispielsweise der Sender T_{A2} den Empfang vom S_{A1} im R_{A1} nicht stört, wenn das Signal S_{MA2} am R_{MA2} des TR_{B1} einen ausreichend niedrigen Pegel erreicht hat, der eine zumindest teilweise Wiederverwendung der Kanalressourcen (Frequenz(subkanäle), Zeit, deren Kombination, CDMA-Code, Senderichtung u. Ä.) des primären Übertragungskanals A1 im Übertragungskanal A2 durch den Netzwerknoten TR_{A2} ermöglicht.

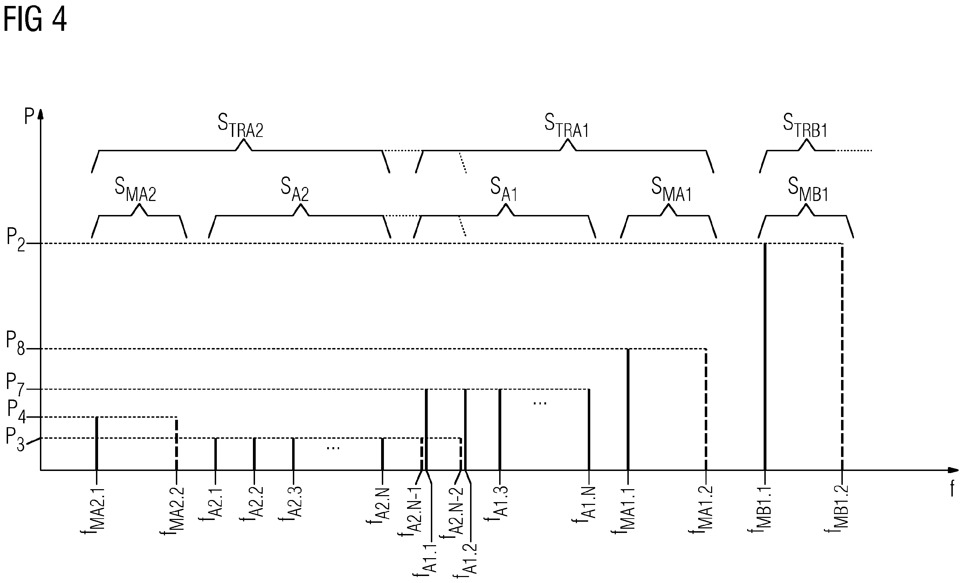

Die Fig. 4 zeigt eine Konstellation der Signale S_{A1}, S_{A2}, S_{MA1}, S_{MB1}, und S_{MA2} am Netzwerkknoten TR_{B1}. Die Signale S_{MA1} und S_{MA2} werden mit einer höheren Leistung pro Frequenzkanal f_{MA1.1}, f_{MA1.2}, f_{MA2.1} und f_{MA2.2} im Vergleich zu S_{A1} bzw. S_{A2} ausgesendet. Das Signal S_{MA2} in den Frequenzkanälen f_{MA2.1}, f_{MA2.2} weist einen Pegel P₄ auf, der zwar niedriger ist als dessen Pegel P₂ am T_{MA2}, aber ausreichend genug, um vom R_{MA2} im Netzwerknoten TR_{B1} empfangen werden zu können.

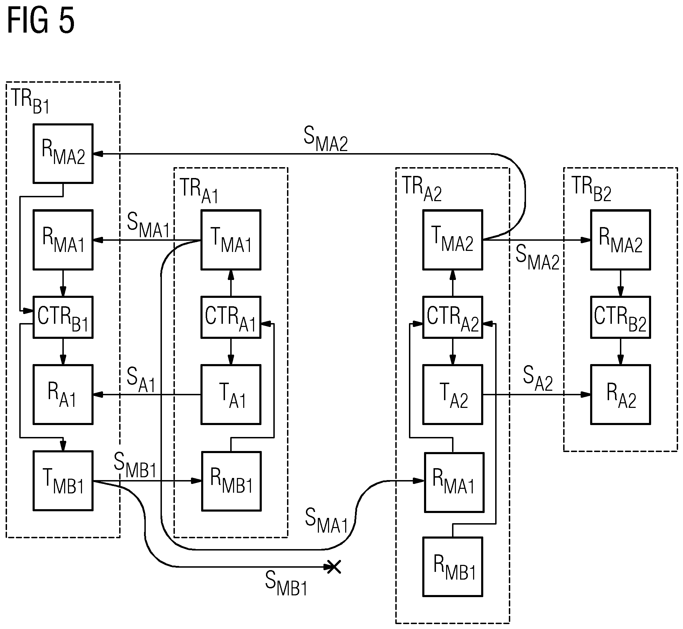

Die dritte alternative Variante gemäß Figur 5 basiert auf beiden vorigen Varianten mit dem Unterschied, dass die Netzwerkknoten TR_{A1} und TR_{A2} die Empfänger R_{MB1} bzw. R_{MA1} nun regulär enthalten, da ein direkter Empfang des Signals S_{MB1} vom TR_{B1} im TR_{A2} nicht möglich ist.

In der Anordnung werden die im Signal S_{MB1} enthaltenen Informationen aus den vorigen Ausführungsbeispielen über die Daten-/Signalübertragung im primären Übertragungskanal A1 und eventuell in weiteren primären Übertragungskanälen (insb. B1, A2, B2) und in weiteren sekundären Übertragungskanälen (insb. MA1, MB1, MA2, MB2 usw.), die insbesondere für den dritten Netzwerkknoten TR_{A2} von Interesse sind, zunächst vom Netzwerkknoten TR_{B1} an seinen Partnernetzwerkknoten TR_{A1} gesendet. Der Empfänger R_{MB1} im TR_{A1} übergibt die Informationen an die Netzwerkknotensteuerungseinrichtung CTR_{A1}, die zumindest ein Teil der Informationen aus dem Signal S_{MB1} und eventuell mit weiteren Informationen über die Daten-/Signalübertragung in anderen Kanälen (insbesondere A1, MA1, B1, MB1, A2, MA2, B2, MB2 u. Ä) mittels des Senders T_{MA1} bzw. einen zweiten sekundären Übertragungskanal MA1 an den Netzwerkknoten TR_{A2} aussendet.

Wenn der Empfänger R_{MA1} des Netzwerkknotens TR_{A2} das Signal S_{MA1} mit Informationen über Daten-/Signalübertragung im primären Übertragungskanal A1 und anderen Übertragungskanälen empfängt, erkennt das Netzwerkknotensteuerungselement CTR_{A2} die Belegung des primären Übertragungskanal A1 durch den Sender T_{A1} im TR_{A1} bzw. Empfänger R_{A1} im TR_{B1}, analysiert die empfangenen Dämpfungsinformationen zwischen den Netzwerkknoten TR_{B1} und TR_{A2}, schätzt optional zusätzlich die Dämpfung des Signals S_{MA1} vom TR_{A1} zum TR_{A2} und weist, wenn notwendig, den Sender T_{A2} an, den primären Übertragungskanal A1 nicht zu blockieren bzw. den Empfänger R_{A1} nicht zu stören. Dies unter der Annahme, dass zumindest aufgrund des vom TR_{B1} über den TR_{A1} übermittelten Rauschpegels und SNR an dessen Empfänger R_{A1} bzw. des Empfangspegels vom S_{MA2} am R_{A2} eine ausreichen gute Abschätzung der Dämpfung des Nutzdatensignals S_{A2} vom Netzwerkknoten TR_{A2} zum Netzwerkknoten TR_{B1} bzw. einer mögliche Störung des Empfänger R_{A1} durch das gedämpfte Signal S_{A2} erfolgt. Somit werden die sekundären Kanal MB1, MA1 und MA2 für die erste Teilproblemlösung des Exposed-Station-Problems verwendet. Im Netzwerkknotens TR_{A2} kann optional auch die Dämpfung des Signals S_{MA1} zwischen den Netzwerkknoten TR_{A1} und TR_{A2} abgeschätzt bzw. bei der vorher beschriebenen Einschätzung über eine zumindest teilweise Wiederverwendung der Kanalressourcen im primären Übertragungskanal A1 durch den T_{A2} berücksichtigt werden.

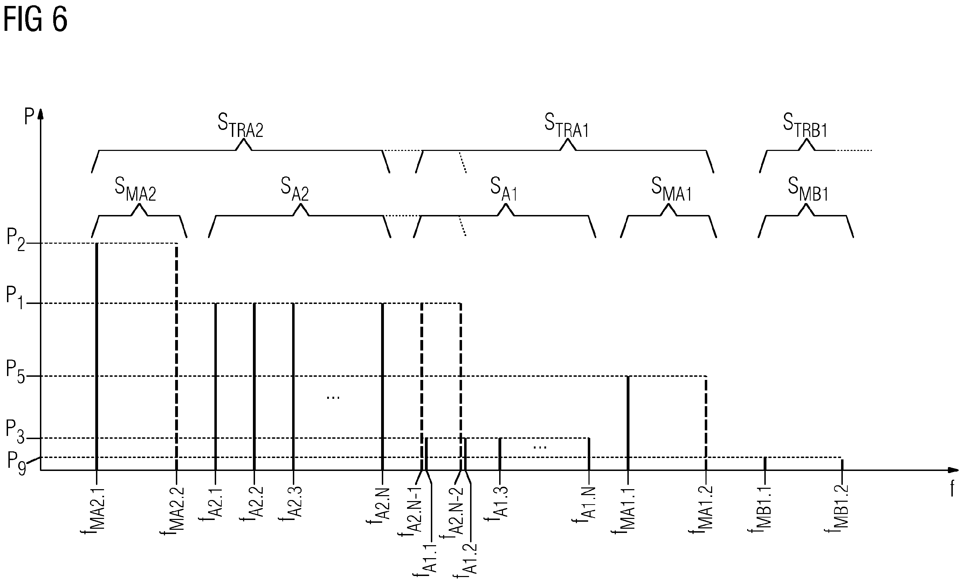

Eine zusätzliche Besonderheit bei der Ausführung zu der bereits im vorigen Ausführungsbeispiel beschriebenen besteht darin, dass das Signal S_{MB1} im sekundären Kanal MB1 und in weiterer Folge das Signal S_{MA1} im sekundären Kanal MA1 zusammen über eine größere Reichweite (bis zum Netzwerkknoten TR_{A2}) übertragen werden können als das Signal S_{A2} im primären Kanal A2. Dies kann beispielsweise durch die Verwendung eines robusteren Übertragungsmodus oder durch eine höhere Sendeleistung erzielt werden und soll sicherstellen, dass beispielsweise der Sender T_{A2} den Empfang vom S_{A1} im R_{A1} nicht stört, wenn das Signal S_{MA2} am R_{MA2} des TR_{B1} einen ausreichend niedrigen Pegel erreicht hat, der eine zumindest teilweise Wiederverwendung der Kanalressourcen (Frequenz(subkanäle), Zeit, deren Kombination, CDMA-Code, Senderichtung u. Ä.) des primären Übertragungskanals A1 im Übertragungskanal A2 durch den Netzwerknoten TR_{A2} ermöglicht. Die Fig. 6 zeigt beispielsweise eine Konstellation der Signale S_{A1}, S_{A2}, S_{MA1}, S_{MB1}, und S_{MA2} am Netzwerkknoten TR_{A2}. Die Signale S_{MA1} und S_{MA2} werden mit einer höheren Leistung pro Frequenzkanal f_{MA1.1}, f_{MA1.2}, f_{MA2.1} und f_{MA2.2} im Vergleich zu S_{A1} bzw. S_{A2} ausgesendet. Das Signal S_{MB1} in den Frequenzkanälen F_{MB1.1}, F_{MB1.2} weist einen Pegel P₉ auf, der zu niedrig ist, um vom R_{MB1} im Netzwerknoten TR_{A2} empfangen werden zu können, aber ausreichend hoch für den Empfang durch den R_{MB1} im Netzwerknoten TR_{A1}.

Wenn keine Beeinflussung (Störung/unerwünschte Signalqualitätsminderung) der Signalempfangs des zweiten Netzwerkknoten vom ersten Netzwerkknoten durch den dritten Netzwerkknoten gegeben ist, befasst sich die eingangs erwähnte zweite Teilproblemlösung für das Exposed-Station-Problem mit der Vermeidung einer Störung bzw. einer unerwünschten Signalqualitätsminderung der Signalempfangs im weiteren Netzwerkknoten durch den zweiten Netzwerkknoten. Für die Gesamtlösung des Exposed-Station-Problems ist eine der Ausführungen/Varianten der ersten Teilproblemlösung gemeinsam mit einer der Ausführungen/Varianten der zweiten Teilproblemlösung zu betrachten.

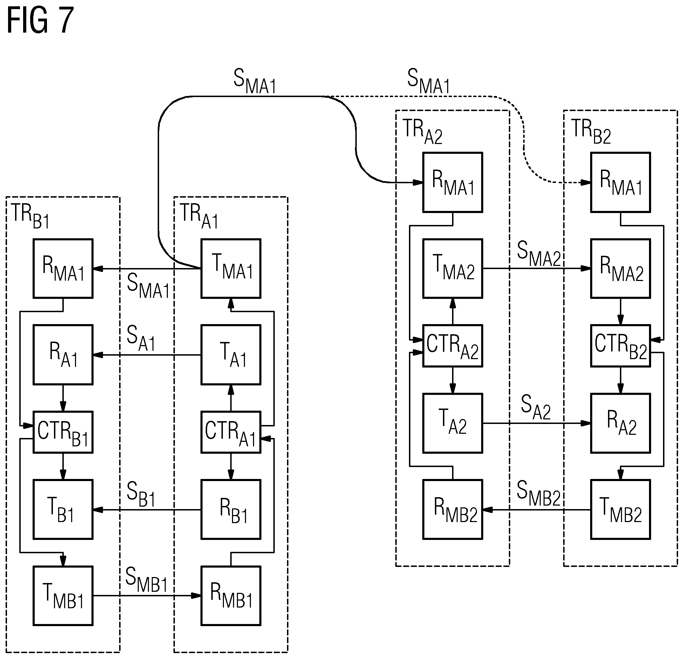

Im vierten Ausführungsbeispiel gemäß Figur 7 werden mindestens drei Netzwerkknoten betrachtet: der erste Netzwerkknoten TR_{A1}, der dritte Netzwerkknoten TR_{A2}, der weitere Netzwerkknoten TR_{B2} und optional der zweite Netzwerkknoten TR_{B1}. Die Netzwerkknoten TR_{A1} und TR_{A2} umfassen Sender T_{A1} bzw. T_{A2} für primäre Übertragungskanäle A1 bzw. A2, Sender T_{MA1} bzw. T_{MA2} für sekundäre Übertragungskanäle MA1 bzw. MA2 und Netzwercknotensteuerungseinrichtungen CTR_{A1} bzw. CTR_{A2}. Optional enthält der Netzwerkknoten TR_{A1} Empfänger R_{B1} und R_{MB1}, um vom Netzwerkknoten TR_{B1} das Signal S_{B1} aus dem primären Übertragungskanal B1 und das Signal S_{MB1} aus dem sekundären Übertragungskanal MB1 empfangen zu können. Außerdem enthält der Netzwerkknoten TR_{A2} vorzugsweise einen Empfänger R_{MB2} und einen optionalen Empfänger R_{MA1}, um das Signal S_{MB2} aus dem sekundären Übertragungskanal MB2 vom Netzwerkknoten TR_{B2} bzw. optional das Signal S_{MA1} aus dem sekundären Übertragungskanal MA1 vom Netzwerkknoten TR_{A1} empfangen zu können. Der optionale Netzwerkknoten TR_{B1} und der Netzwerkknoten TR_{B2} umfassen Empfänger R_{A1} bzw. R_{A2}, für primäre Übertragungskanäle A1 bzw. A2, Empfänger R_{MA1} bzw. R_{MA2} für sekundäre Übertragungskanäle MA1 bzw. MA2 und Netzwerkknotensteuerungseinrichtung CTR_{B1} bzw. CTR_{B2}. Zusätzlich enthält der TR_{B2} einen Sender T_{MB2} für den sekundären Übertragungskanal MB2 und einen optionalen Empfänger R_{MA1}, um das Signal S_{MA1} aus dem sekundären Übertragungskanal MA1 vom Netzwerkknoten TR_{A1} empfangen zu können. Außerdem enthält der optionale Netzwerkknoten TR_{B1} einen Sender T_{B1}, für die Übertragung des Signal S_{B1} über den primären Übertragungskanal B1 und einen Sender T_{MB1}, für die Übertragung des Signal S_{MB1} über den sekundären Übertragungskanal MB1.

Der dritte Netzwerkknoten TR_{A2} sendet vorzugsweise an den weiteren Netzwerkknoten (seinen Partnernetzwerkknoten) TR_{B2} über den primären Übertragungskanal A2 ein Nutzdatensignal S_{A2} und über den sekundären Übertragungskanal MA2 das Signal S_{MA2} aus, das Informationen über die Daten-/Signalübertragung im primären Übertragungskanal A2 und eventuell in weiteren primären Übertragungskanälen (insb. B1, A1, B2) und in weiteren sekundären Übertragungskanälen (insb. MA1, MB1, MA2, MB2 usw.) enthält.

Der weitere Netzwerkknoten TR_{B2} sendet vorzugsweise an den dritten Netzwerkknoten (seinen Partnernetzwerkknoten) TR_{A2} zumindest über den sekundären Übertragungskanal MB2 das Signal S_{MB2} aus, das vorzugsweise die Informationen über die Daten-/Signalübertragung im sekundären Übertragungskanal MA1 und eventuell weiteren sekundären Übertragungskanälen (insb. MB1, MA2, MB2 usw.) und in primären Übertragungskanälen (insb. A1, B1, A2, B2) enthält.

Der erste Netzwerkknoten TR_{A1} sendet zumindest über den sekundären Übertragungskanal MA1 das Signal S_{MA1} vorzugsweise an den optionalen zweiten Netzwerkknoten TR_{B1} aus, das Informationen über die Daten-/Signalübertragung im primären Übertragungskanal A1 und eventuell in weiteren primären Übertragungskanälen (insb. B1, A2, B2) und in weiteren sekundären Übertragungskanälen (insb. MA1, MB1, MA2, MB2 usw.) enthält, die insbesondere für den dritten und/oder den weiteren Netzwerkknoten TR_{A2} bzw. TR_{B2} von Interesse sind. Anmerkung: die beiden Netzwerkknoten TR_{A2} und TR_{B2} können auch weitere Elemente einer Duplex-Verbindung, wie beispielsweise Sender/Empfänger für den primären Übertragungskanal B2 und den sekundären Übertragungskanal MB2, enthalten.

Wenn der Empfänger R_{MA1} des Netzwerkknotens TR_{B2} das Signal S_{MA1} mit Informationen über Daten-/Signalübertragung im primären Übertragungskanal A1 und anderen Übertragungskanälen empfängt, erkennt das Netzwerkknotensteuerungselement CTR_{B2} die Belegung des primären Übertragungskanal A1 durch den Sender T_{A1} im TR_{A1} bzw. Empfänger R_{A1} im TR_{B1}, schätzt die Dämpfung des Signals S_{MA1} vom TR_{A1} zum TR_{B2} und entscheidet, ob das Signal S_{A1} am TR_{B2} den Empfang vom S_{A2} durch den R_{A2} stören würde, wenn im primären Übertragungskanal A2 zumindest teilweise dieselben Übertragungskanalressourcen verwendet werden wie im primären Übertragungskanal A1. Im Fall einer potentiellen Störung weist die Netzwerkknotensteuerungseinrichtung CTR_{B2} über den sekundären Übertragungskanal MB2 mittels einer Steuerungsinformation im Signal S_{MB2} und weiter über den Empfänger R_{MB2}, über die Netzwerkknotensteuerungseinrichtung CTR_{A2} den Sender T_{A2} an, im primären Übertragungskanal A2 keine Übertragungskanalressourcen aus dem primären Übertragungskanal A1 wieder zu verwenden. Dies unabhängig davon, ob der Empfänger R_{MA1} des Netzwerkknotens TR_{A2} das Signal S_{MA1} mit Informationen über Daten-/Signalübertragung im primären Übertragungskanal A1 empfängt oder nicht. Wenn der Empfänger R_{MA1} des Netzwerkknotens TR_{B2} das Signal S_{MA1} mit Informationen über Daten-/Signalübertragung im primären Übertragungskanal A1 nicht empfängt, wird davon ausgegangen, dass die Dämpfung des vom Netzwerkknotens TR_{A1} gesendeten Signals S_{A1} bis zum Empfänger R_{MA1} des Netzwerkknotens TR_{B2} ausreichend groß ist, um unter der Berücksichtigung der eingangs genannten Bedingung im primären Übertragungskanal A2 zumindest teilweise die Übertragungskanalressourcen aus dem primären Übertragungskanal A1 verwenden zu können.

Eine zusätzliche Besonderheit zum bei der Ausführung der bereits in der vorigen Variante beschriebenen Ansatz besteht darin, dass das Signal S_{MA1} im sekundären Kanal MA1 und in weiterer Folge das Signal S_{MB2} im sekundären Kanal MB2 zusammen über eine größere Reichweite (bis zu den Netzwerkknoten TR_{A2} und TR_{B2}) übertragen werden können als das Signal S_{A1} im primären Kanal A1. Dies kann beispielsweise durch die Verwendung eines robusteren Übertragungsmodus oder durch eine höhere Sendeleistung erzielt werden und soll sicherstellen, dass beispielsweise der Sender T_{A1} den Empfang vom S_{A2} im R_{A2} nicht stört, wenn das Signal S_{MA1} am R_{MA1} des TR_{B2} einen ausreichend niedrigen Pegel erreicht hat, der eine zumindest teilweise Wiederverwendung der Kanalressourcen (Frequenz(subkanäle), Zeit, deren Kombination, CDMA-Code, Senderichtung u. Ä.) des primären Übertragungskanals A1 im Übertragungskanal A2 durch den Netzwerknoten TR_{A2} ermöglicht.

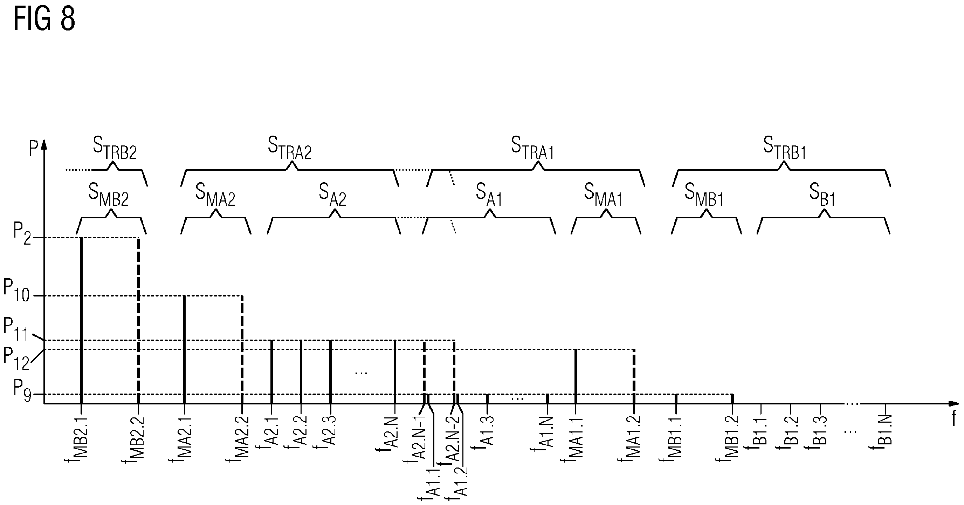

Die Fig. 8 zeigt eine Konstellation der Signale S_{A1}, S_{A2}, S_{MA1}, S_{MB1}, und S_{MA2} am Netzwerkknoten TR_{B2}. Die Signale S_{MA1} und S_{MA2} werden mit einer höheren Leistung pro Frequenzkanal f_{MA1.1}, f_{MA1.2}, f_{MA2.1} und f_{MA2.2} im Vergleich zu S_{A1} bzw. S_{A2} ausgesendet. Das Signal S_{MA1} in den Frequenzkanälen F_{MA1.1}, f_{MA1.2} weist einen Pegel P₁₂ auf und kann durch R_{MA1} im Netzwerkknoten TR_{B2}, empfangen werden. Das dazugehörige Signal S_{A1} in den Frequenzkanälen f_{A1.1} bis f_{A1.N} weist einen Pegel P₉ der zu niedrig ist, um den Empfang im Empfänger R_{A2} des Signal S_{A2} insbesondere in den auch durch den Sender TR_{A2} verwendeten Frequenzsubkanälen f_{A2.N+1} bis f_{A2.N+2} zu stören.

In den Fig. 2, Fig. 4, Fig. 6 und Fig. 8 sind die Frequenzsubkanäle f_{A2.N+1} bis f_{A2.N+2} des Nutzdatensignals S_{A2} jeweils als gestrichelte Linien dargestellt, die beispielsweise bei einer koordinierten Ausnutzung der Bandbreite des primären Übertragungskanals A2 in Richtung des primären Übertragungskanals A1 durch den Sender TR_{A2} wiederverwendetet werden können. Alle hier beschriebenen Varianten des erfindungsgemäßen Verfahrens sind nicht alleinstehend als klar abgegrenzte Verfahren gedacht, sondern für den Fachmann vielmehr frei kombinierbar.

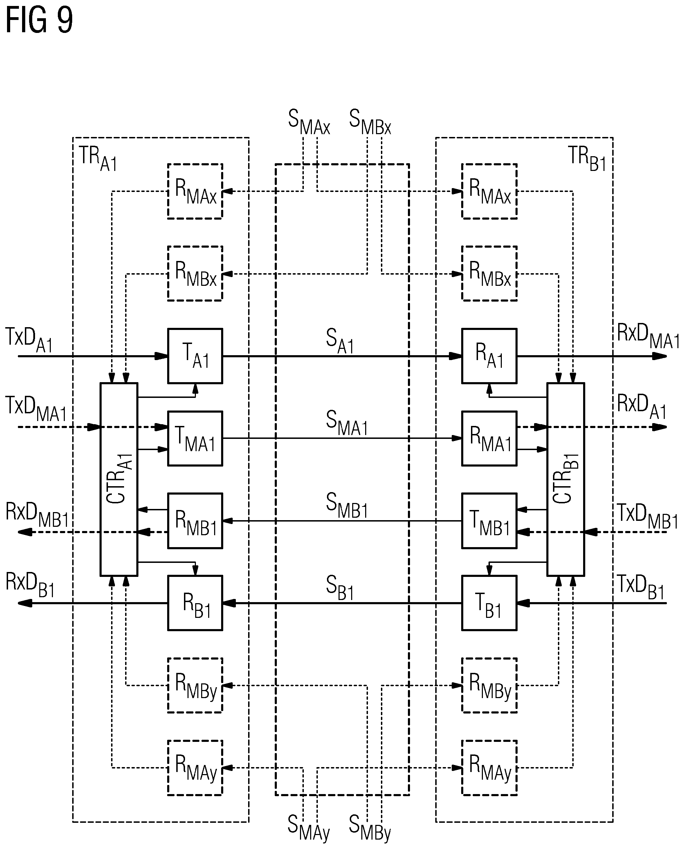

Eine Weiterbildung der Systeme aus den Fig. 1, Fig. 3, Fig. 5 und Fig. 7 ist eine Verwendung für jede Übertragungsrichtung bei einer Duplexübertragung. Fig.9 zeigt eine Anordnung zweier Netzwerkknoten TR_{A1}, TR_{B1}, die eine bidirektionale Übertragung/Empfang von Daten als TxD_{A1} bzw. RxD_{B1} und RxD_{A1} bzw. TxD_{B1} in einer Duplex-Verbindung über die primären Übertragungskanäle A1 bzw. B1 ermöglichen.

Alternativ und/oder zusätzlich können in der Duplex-Verbindung die Daten und ev. weitere Daten als TxD_{MA1} bzw. RxD_{MB1} und RxD_{MA1} bzw. TxD_{MB1} über die robusteren sekundären Übertragungskanäle MA1 bzw. MB1 übertragen werden. Die Anordnung umfasst Sender T_{A1} bzw. T_{B1}, für primäre Übertragungskanäle A1 bzw. B1, Sender T_{MA1} bzw. T_{MB1} für sekundäre Übertragungskanäle MA1 bzw. MB1, Empfänger R_{MB1} bzw. R_{MA1}, Netzwercknotensteuerungseinrichtungen CTR_{A1} bzw. CTR_{B1} und zumindest einen der mehreren (1 bis n, n ≥ 4) optionalen Empfänger R_{MAx}, R_{MBx}, R_{MAy} und R_{MBy} (weitere mögliche Empfänger für Signale aus weiteren sekundären Übertragungskanälen sind in der Fig.9 nicht dargestellt). Sie ermöglichen einen Informationsaustausch über die sekundären Übertragungskanäle Max, MBx, MAy bzw. MBy mit anderen Netzwerknoten bezüglich der Daten-/Signalübertragung in jeweiligen primären (Ax, Bx, Ay bzw. By) und ev. in sekundären (MAx, MBx, MAy bzw. MBy) Übertragungskanälen anderer Netzwerkknoten. Eine solche Duplex-Verbindung kann beispielsweise auf Basis eines Vollduplex oder TDD(time division duplex) oder FDD(frequency division duplex) oder CDD (code division duplex) oder deren Kombination realisiert werden.

Die sekundären Übertragungskanäle können beispielsweise als FDM(frequency division multiplex)-Subkanäle oder als Subkanäle eines für mehrere Netzwerkknoten gemeinsamen sekundären TDM(time division multiplex)-oder CDM(code division multiplex)-Übertragungskanals oder deren Kombination sein.

## Patentansprüche

1. Verfahren zur Datenübertragung über eine Hoch- oder Mittelspannungsleitung, bei dem zwischen einer ersten Datenübertragungsvorrichtung (TRA1) und einer zweiten Datenübertragungsvorrichtung (TRB1) primäre Frequenzkanäle (A1) zur Datenübertragung verwendet werden und auf einem sekundären Frequenzkanal (MB1) eine Frequenzkanal-Belegungsinformation (SMB1) übermittelt wird, **dadurch gekennzeichnet, dass**
eine dritte Datenübertragungsvorrichtung (TRA2) die Frequenzkanal-Belegungsinformation (SMB1) auf dem sekundären Frequenzkanal (MB1) empfängt, und eine Belegung eines von der ersten und der zweiten Datenübertragungsvorrichtung (TRA1, TRB1) benutzten primären Frequenzkanals (A1) erkennt, und diesen Frequenzkanal (A1) für die eigene Verwendung freigibt, wenn die Signalstärke der von der dritten Datenübertragungsvorrichtung (TRA2) empfangenen Belegungsinformation (SMB1) einen ersten vorher festgelegten Schwellenwert unterschreitet, und
dass die dritte Datenübertragungsvorrichtung (TRA2) eine weitere Frequenzkanal-Belegungsinformation (SMA1) auf einem weiteren sekundären Frequenzkanal (MA1) empfängt, wobei die beiden Frequenzkanal-Belegungsinformationen (SMA1, SMB1) jeweils von der ersten oder der zweiten Datenübertragungsvorrichtung (TRA1, TRB1) gesendet werden, und diesen primären Frequenzkanal (A1) für die eigene Verwendung freigibt, wenn die Signalstärke der Datenübertragung auf dem weiteren sekundären Frequenzkanal (MA1) einen zweiten vorher festgelegten Schwellenwert unterschreitet.

2. Verfahren nach Anspruch 1, **dadurch gekennzeichnet, dass** jede der beiden Frequenzkanal-Belegungsinformationen (SMA1, SMB1) zusätzlich zu der Information über die Belegung des von der aussendenden Datenübertragungsvorrichtung (TRA1, TRB1) verwendeten primären Frequenzkanals (A1) eine Frequenzkanal-Belegungsinformationen (SMA1, SMB1) über den von der jeweiligen Partnervorrichtung verwendeten primären Frequenzkanal (A1) aufweist, so dass auch bei einer Störung des Empfangs einer der beiden sekundären Frequenzkanäle (MA1, MB1) bei der dritten Datenübertragungsvorrichtung (TRA2) die dritte Datenübertragungsvorrichtung (TRA2) eine Belegungsinformation über alle von der ersten und der zweiten Datenübertragungsvorrichtung (TRA1, TRB1) verwendeten primären Frequenzkanäle (A1) erhält.

3. Verfahren nach einem der vorhergehenden Ansprüche, **dadurch gekennzeichnet, dass** die dritte Datenübertragungsvorrichtung (TRA2) eine Belegungsinformation (SMA2) auf einem weiteren sekundären Frequenzkanal aussendet, der von der zweiten Datenübertragungsvorrichtung (TRB1) empfangen wird, und dass die zweite Datenübertragungsvorrichtung (TRB1) die Signalstärke der Belegungsinformation (SMA2) auf dem weiteren sekundären Frequenzkanal ermittelt und auf einem sekundären Frequenzkanal (SMB1) an die dritte Datenübertragungsvorrichtung (TRA2) zurück meldet, so dass die dritte Datenübertragungsvorrichtung (TRA2) den von der ersten und der zweiten Datenübertragungsvorrichtung (TRA1, TRB1) verwendeten primären Frequenzkanal (A1) für die eigene Verwendung freigibt, wenn die Signalstärke der von der dritten Datenübertragungsvorrichtung (TRA2) gesendeten Belegungsinformation (SMA2) einen dritten vorher festgelegten Schwellenwert unterschreitet.

4. Verfahren nach einem der vorhergehenden Ansprüche, **dadurch gekennzeichnet, dass** die erste und die zweite Datenübertragungsvorrichtung (TRA1, TRB1) ein erstes Paar ausbilden und die dritte und eine vierte Datenübertragungsvorrichtung (TRA2, TRB2) ein zweites Paar ausbilden, wobei das zweite Paar (TRA2, TRB2) die von dem ersten Paar (TRA1, TRB1) genutzten primären Frequenzkanäle für die eigene Verwendung freigibt, wenn die Signalstärke der von dem ersten Paar gesendeten Belegungsinformationen (SMA1, SMB1) beim Empfang sowohl bei der dritten als auch bei der vierten Datenübertragungsvorrichtung (TRA2, TRB2) einen vorher festgelegten vierten Schwellenwert unterschreitet.

5. Verfahren nach einem der vorhergehenden Ansprüche, **dadurch gekennzeichnet, dass** der sekundäre Frequenzkanal mit einer höheren Sendeleistung als der jeweiligen Sendeleistung der primären Frequenzkanäle betrieben wird.

6. Verfahren nach einem der vorhergehenden Ansprüche, **dadurch gekennzeichnet, dass** der sekundäre Frequenzkanal mit einem anderen Übertragungsverfahren als die primären Frequenzkanäle betrieben wird, das eine größere Reichweite der Signalübertragung im sekundären Frequenzkanal bewirkt.

7. Verfahren nach einem der vorhergehenden Ansprüche, **dadurch gekennzeichnet, dass** für den sekundären Frequenzkanal als Datenübertragungsmethode frequency shift keying eingesetzt wird.

8. Verfahren nach einem der vorhergehenden Ansprüche, **dadurch gekennzeichnet, dass** als sekundärer Frequenzkanal (MB1) ein Schutzsignal-Frequenzkanal verwendet wird.

9. Verfahren nach einem der vorhergehenden Ansprüche, **dadurch gekennzeichnet, dass** auf dem sekundären Frequenzkanal (MB1) Zusatzdaten übertragen werden, die mindestens eine der folgenden Signalempfangsqualitätsinformationen aufweisen: Empfangspegel, Signal-zu-Rauschen Verhältnis, Bitfehlerrate, Blockfehlerrate, Rauschpegel, Modulations- und/oder Kanalkodierungsart, Meldungsformat, untere/obere Grenzfrequenz eines Frequenzkanals, Mittenfrequenz, Bandbreite, minimale Bandbreite, Vorzugsmittenfrequenz, Frequenzbandkennung, Sende- und/oder Empfangspegel, Identifikationsnummer des sendenden Netzwerkknotens, Identifikationsnummer des Partnernetzwerkknotens.

10. Verfahren nach einem der Ansprüche 8 bis 9, **dadurch gekennzeichnet, dass** für den Schutzsignal-Frequenzkanal als Datenübertragungsmethode frequency shift keying eingesetzt wird, wobei Signale außerhalb eines vorher festgelegten Frequenzbereichs als ein Schutzsignal und Signale innerhalb des vorher fest-gelegten Frequenzbereichs als Zusatzdaten verarbeitet werden.

11. System zur Datenübertragung über eine Hoch- oder Mittelspannungsleitung mit einer ersten Datenübertragungsvorrichtung (TRA1) und einer zweiten Datenübertragungsvorrichtung (TRB1), die ausgebildet sind, primäre Frequenzkanäle (A1) zur Datenübertragung zu verwenden und auf einem sekundären Frequenzkanal (MB1) eine Frequenzkanal-Belegungsinformation (SMB1) zu übermitteln, **dadurch gekennzeichnet, dass** eine dritte Datenübertragungs-vorrichtung (TRA2) vorgesehen ist, die ausgebildet ist, die Frequenzkanal-Belegungsinformation (SMB1) auf dem sekundären Frequenzkanal (MB1) zu empfangen und eine Belegung eines von der ersten und der zweiten Datenübertragungsvorrichtung (TRA1, TRB1) benutzten primären Frequenzkanals (A1) zu erkennen, und diesen Frequenzkanal (A1) für die eigene Verwendung freizugeben, wenn die Signalstärke der von der dritten Datenübertragungsvorrichtung (TRA2) empfangenen Belegungsinformation (SMB1) einen ersten vorher festgelegten Schwellenwert unterschreitet, und dass die dritte Datenübertragungsvorrichtung (TRA2) weiterhin ausgebildet ist, eine weitere Frequenzkanal-Belegungs-information (SMA1) auf einem weiteren sekundären Frequenzkanal (MA1) zu empfangen, wobei die beiden Frequenzkanal-Belegungsinformationen (SMA1, SMB1) jeweils von der ersten oder der zweiten Datenübertragungsvorrichtung (TRA1, TRB1) gesendet werden, und wobei die dritte Datenübertragungsvorrichtung (TRA2) ausgebildet ist, diesen primären Frequenzkanal (A1) für die eigene Verwendung freizugeben, wenn die Signalstärke der Datenübertragung auf dem weiteren sekundären Frequenzkanal (MA1) einen zweiten vorher festgelegten Schwellenwert unterschreitet.

12. System nach Anspruch 11, **dadurch gekennzeichnet, dass** die erste und die zweite Datenübertragungs-vorrichtung (TRA1,TRB1) ausgebildet sind, jede der beiden Frequenzkanal-Belegungsinformationen (SMA1, SMB1) zusätzlich zu der Information über die Belegung des von der aussendenden Datenübertragungsvorrichtung (TRA1, TRB1) verwendeten primären Frequenzkanals (A1) mit einer Frequenzkanal-Belegungsinformationen über den von der jeweiligen Partnervorrichtung verwendeten primären Frequenzkanal auszusenden, und dass die dritten Datenübertragungsvorrichtung (TRA2) ausgebildet ist, auch bei einer Störung des Empfangs einer der beiden sekundären Frequenzkanäle (SMA1, SMB1) eine Belegungsinformation über alle von der ersten und der zweiten Datenübertragungsvorrichtung (TRA1, TRB1) verwendeten primären Frequenzkanäle (A1) zu empfangen.

13. System nach einem der Ansprüche 11 bis 12, **dadurch gekennzeichnet, dass** die dritte Datenübertragungsvorrichtung (TRA2) ausgebildet ist, eine Belegungs-information (SMA2) auf einem weiteren sekundären Frequenzkanal auszusenden, und die zweite Datenübertragungsvorrichtung (TRB1) ausgebildet ist, diese Belegungsinformation (SMA2) auf dem weiteren sekundären Frequenzkanal zu empfangen und die Signalstärke der Belegungsinformation (SMA2) zu ermitteln, und auf einem sekundären Frequenzkanal (SMB1) an die dritte Datenübertragungsvorrichtung (TRA2) zurück zu melden, und dass die dritte Datenübertragungsvorrichtung (TRA2) ausgebildet ist, den von der ersten und der zweiten Datenübertragungsvorrichtung (TRA1, TRB1) verwendeten primären Frequenzkanal (A1) für die eigene Verwendung freizugeben, wenn die Signalstärke der von der dritten Datenübertragungsvorrichtung (TRA2) gesendeten Belegungs-information (SMA2) einen dritten vorher festgelegten Schwellenwert unterschreitet.

14. System nach einem der Ansprüche 11 bis 13, **dadurch gekennzeichnet, dass** die erste und die zweite Datenübertragungsvorrichtung (TRA1, TRB1) ausgebildet sind, ein erstes Paar ausbilden, und die dritte und eine vierte Datenübertragungsvorrichtung (TRA2, TRB2) ausgebildet sind, ein zweites Paar ausbilden, wobei das zweite Paar (TRA2,TRB2) die von dem ersten Paar (TRA1, TRB1) genutzten primären Frequenzkanäle für die eigene Verwendung freigibt, wenn die Signalstärke der von dem ersten Paar gesendeten Belegungsinformationen (SMA1, SMB1) beim Empfang sowohl bei der dritten als auch bei der vierten Datenübertragungsvorrichtung (TRA2, TRB2) einen vorher festgelegten vierten Schwellenwert unterschreitet.

15. System nach einem der Ansprüche 11 bis 14, **dadurch gekennzeichnet, dass** die Datenübertragungsvorrichtungen (TRA1, TRA2, TRB1, TRB2) ausgebildet sind, den jeweiligen sekundären Frequenzkanal (SMA1, SMB1, SMB2, SMA2) mit einer höheren Sendeleistung als der jeweiligen Sendeamplitude der primären Frequenzkanäle (A1, A2) zu betreiben.

16. System nach einem der Ansprüche 11 bis 15, **dadurch gekennzeichnet, dass** die Datenübertragungsvorrichtungen (TRA1, TRA2, TRB1, TRB2) ausgebildet sind, den sekundären Frequenzkanal mit einem anderen Übertragungsverfahren als die primären Frequenzkanäle (A1, A2) zu betreiben, das eine größere Reichweite der Signalübertragung im sekundären Frequenzkanal bewirkt.

17. System nach einem der Ansprüche 11 bis 16, **dadurch gekennzeichnet, dass** die Datenübertragungsvorrichtungen (TRA1, TRA2, TRB1, TRB2) ausgebildet sind, für den sekundären Frequenzkanal als Datenübertragungsmethode frequency shift keying einzusetzen.

18. System nach einem der Ansprüche 11 bis 17, **dadurch gekennzeichnet, dass** die Datenübertragungsvorrichtungen (TRA1, TRA2, TRB1, TRB2) ausgebildet sind, als sekundären Frequenzkanal (MB1) einen Schutzsignal-Frequenzkanal zu verwenden.

19. System nach einem der Ansprüche 11 bis 18, **dadurch gekennzeichnet, dass** die Datenübertragungsvorrichtungen (TRA1, TRA2, TRB1, TRB2) ausgebildet sind, auf dem sekundären Frequenzkanal Zusatzdaten zu übertragen, die mindestens eine der folgenden Signalempfangsqualitätsinformationen aufweisen: Empfangspegel, Signal-zu-Rauschen Verhältnis, Bitfehlerrate, Blockfehlerrate, Rauschpegel, Modulations- und/oder Kanalkodierungsart, Meldungsformat, untere/obere Grenzfrequenz eines Frequenzkanals, Mittenfrequenz, Bandbreite, minimale Bandbreite, Vorzugsmittenfrequenz, Frequenzbandkennung, Sende- und/oder Empfangspegel, Identifikationsnummer des sendenden Netzwerkknotens, Identifikationsnummer des Partnernetzwerkknotens.

20. System nach einem der Ansprüche 18 bis 19, **dadurch gekennzeichnet, dass** die Datenübertragungsvorrichtungen (TRA1, TRA2, TRB1, TRB2) ausgebildet sind, für den Schutzsignal-Frequenzkanal als Datenübertragungsmethode frequency shift keying einzusetzen, wobei Signale außerhalb eines vorher festgelegten Frequenzbereichs als ein Schutzsignal und Signale innerhalb des vorher festgelegten Frequenzbereichs als Zusatzdaten verarbeitet werden.

## Claims

1. Method for data transmission via a high-voltage or medium-voltage line, in which primary frequency channels (A1) are used for data transmission between a first data transmission apparatus (TRA1) and a second data transmission apparatus (TRB1)
and an item of frequency channel occupancy information (SMB1) is transferred on a secondary frequency channel (MB1), **characterised in that**
a third data transmission apparatus (TRA2) receives the frequency channel occupancy information (SMB1) on the secondary frequency channel (MB1), and identifies an occupancy of a primary frequency channel (A1) used by the first and the second data transmission apparatus (TRA1, TRB1), and releases said frequency channel (A1) for its own use when the signal strength of the occupancy information (SMB1) received by the third data transmission apparatus (TRA2) falls below a first previously defined threshold value, and that the third data transmission apparatus (TRA2) receives a further item of frequency channel occupancy (SMA1) on a further secondary frequency channel (MA1), wherein the two items of frequency channel occupancy information (SMA1, SMB1) are sent by the first or the second data transmission apparatus (TRA1, TRB1) in each case, and releases said primary frequency channel (A1) for its own use when the signal strength of the data transmission on the further secondary frequency channel (MA1) falls below a second previously defined threshold value.

2. Method according to claim 1, **characterised in that** each of the two items of frequency channel occupancy information (SMA1, SMB1), in addition to the information regarding the occupancy of the primary frequency channel (A1) used by the transmitting data transmission apparatus (TRA1, TRB1), has an item of frequency channel occupancy information (SMA1, SMB1) regarding the primary frequency channel (A1) used by the respective partner apparatus, so that, even in the case of an interruption to the receiving of one of the two secondary frequency channels (MA1, MB1) at the third data transmission apparatus (TRA2), the third data transmission apparatus (TRA2) obtains an item of occupancy information regarding all primary frequency channels (A1) used by the first and the second data transmission apparatus (TRA1, TRB1) .

3. Method according to one of the preceding claims, **characterised in that** the third data transmission apparatus (TRA2) transmits an item of occupancy information (SMA2) on a further secondary frequency channel, which is received by the second data transmission apparatus (TRB1), and that the second data transmission apparatus (TRB1) ascertains the signal strength of the occupancy information (SMA2) on the further secondary frequency channel and reports back to the third data transmission apparatus (TRA2) on a secondary frequency channel (SMB1), so that the third data transmission apparatus (TRA2) releases the primary frequency channel (A1) used by the first and the second data transmission apparatus (TRA1, TRB1) for its own use when the signal strength of the occupancy information (SMA2) sent by the third data transmission apparatus (TRA2) falls below a third previously defined threshold value.

4. Method according to one of the preceding claims, **characterised in that** the first and the second data transmission apparatus (TRA1, TRB1) embody a first pair and the third and a fourth data transmission apparatus (TRA2, TRB2) embody a second pair, wherein the second pair (TRA2, TRB2) releases the primary frequency channels used by the first pair (TRA1, TRB1) for its own use when the signal strength of the occupancy information (SMA1, SMB1) sent by the first pair falls below a previously defined fourth threshold value when received both at the third and at the fourth data transmission apparatus (TRA2, TRB2).

5. Method according to one of the preceding claims, **characterised in that** the secondary frequency channel is operated with a higher transmit power than the respective transmit power of the primary frequency channels.

6. Method according to one of the preceding claims, **characterised in that** the secondary frequency channel is operated with a different transmission method than the primary frequency channels, which causes a wider range of signal transmission in the secondary frequency channel.

7. Method according to one of the preceding claims, **characterised in that** frequency shift keying is used as the data transmission method for the secondary frequency channel.

8. Method according to one of the preceding claims, **characterised in that** a protective signal frequency channel is used as the secondary frequency channel (MB1).

9. Method according to one of the preceding claims, **characterised in that** additional data having at least one of the following items of signal receiving quality information is transmitted on the secondary frequency channel (MB1): receive level, signal-to-noise ratio, bit error rate, block error rate, noise level, modulation and/or channel encoding type, message format, lower/upper frequency limit of a frequency channel, centre frequency, bandwidth, minimum bandwidth, preferred centre frequency, frequency band identification, transmit and/or receive level, identification number of the transmitting network node, identification number of the partner network node.

10. Method according to one of claims 8 to 9, **characterised in that** frequency shift keying is used as the data transmission method for the protective signal frequency channel, wherein signals outside a previously defined frequency range are processed as a protective signal and signals within the previously defined frequency range are processed as additional data.

11. System for data transmission via a high-voltage or medium-voltage line with a first data transmission apparatus (TRA1) and a second data transmission apparatus (TRB1), which are embodied to use primary frequency channels (A1) for data transmission and to transfer an item of frequency channel occupancy information (SMB1) on a secondary frequency channel (MB1), **characterised in that** a third data transmission apparatus (TRA2) is provided, which is embodied to receive the frequency channel occupancy information (SMB1) on the secondary frequency channel (MB1) and to identify an occupancy of a primary frequency channel (A1) used by the first and the second data transmission apparatus (TRA1, TRB1), and to release said frequency channel (A1) for its own use when the signal strength of the occupancy information (SMB1) received by the third data transmission apparatus (TRA2) falls below a first previously defined threshold value, and that the third data transmission apparatus (TRA2) is furthermore embodied to receive a further item of frequency channel occupancy (SMA1) on a further secondary frequency channel (MA1), wherein the two items of frequency channel occupancy information (SMA1, SMB1) are sent by the first or the second data transmission apparatus (TRA1, TRB1) in each case, and wherein the third data transmission apparatus (TRA2) is embodied to release said primary frequency channel (A1) for its own use when the signal strength of the data transmission on the further secondary frequency channel (MA1) falls below a second previously defined threshold value.

12. System according to claim 11, **characterised in that** the first and the second data transmission apparatus (TRA1, TRB1) are embodied to transmit each of the two items of frequency channel occupancy information (SMA1, SMB1), in addition to the information regarding the occupancy of the primary frequency channel (A1) used by the transmitting data transmission apparatus (TRA1, TRB1), with an item of frequency channel occupancy information regarding the primary frequency channel used by the respective partner apparatus, and that, even in the case of an interruption to the receiving of one of the two secondary frequency channels (SMA1, SMB1), the third data transmission apparatus (TRA2) is embodied to receive an item of occupancy information regarding all primary frequency channels (A1) used by the first and the second data transmission apparatus (TRA1, TRB1).

13. System according to one of claims 11 to 12, **characterised in that** the third data transmission apparatus (TRA2) is embodied to transmit an item of occupancy information (SMA2) on a further secondary frequency channel, and the second data transmission apparatus (TRB1) is embodied to receive said occupancy information (SMA2) on the further secondary frequency channel and to ascertain the signal strength of the occupancy information (SMA2), and to report back to the third data transmission apparatus (TRA2) on a secondary frequency channel (SMB1), and that the third data transmission apparatus (TRA2) is embodied to release the primary frequency channel (A1) used by the first and the second data transmission apparatus (TRA1, TRB1) for its own use when the signal strength of the occupancy information (SMA2) sent by the third data transmission apparatus (TRA2) falls below a third previously defined threshold value.

14. System according to one of claims 11 to 13, **characterised in that** the first and the second data transmission apparatus (TRA1, TRB1) are embodied to embody a first pair and the third and a fourth data transmission apparatus (TRA2, TRB2) are embodied to embody a second pair, wherein the second pair (TRA2, TRB2) releases the primary frequency channels used by the first pair (TRA1, TRB1) for its own use when the signal strength of the occupancy information (SMA1, SMB1) sent by the first pair falls below a previously defined fourth threshold value when received both at the third and at the fourth data transmission apparatus (TRA2, TRB2).

15. System according to one of claims 11 to 14, **characterised in that** the data transmission apparatuses (TRA1, TRA2, TRB1, TRB2) are embodied to operate the respective secondary frequency channel (SMA1, SMB1, SMB2, SMA2) with a higher transmit power than the respective transmit amplitude of the primary frequency channels (A1, A2).

16. System according to one of claims 11 to 15, **characterised in that** the data transmission apparatuses (TRA1, TRA2, TRB1, TRB2) are embodied to operate the secondary frequency channel with a different transmission method than the primary frequency channels (A1, A2), which causes a wider range of signal transmission in the secondary frequency channel.

17. System according to one of claims 11 to 16, **characterised in that** the data transmission apparatuses (TRA1, TRA2, TRB1, TRB2) are embodied to use frequency shift keying as the data transmission method for the secondary frequency channel.

18. System according to one of claims 11 to 17, **characterised in that** the data transmission apparatuses (TRA1, TRA2, TRB1, TRB2) are embodied to use a protective signal frequency channel as the secondary frequency channel (MB1).

19. System according to one of claims 11 to 18, **characterised in that** the data transmission apparatuses (TRA1, TRA2, TRB1, TRB2) are embodied to transmit additional data having at least one of the following items of signal receiving quality information on the secondary frequency channel: receive level, signal-to-noise ratio, bit error rate, block error rate, noise level, modulation and/or channel encoding type, message format, lower/upper frequency limit of a frequency channel, centre frequency, bandwidth, minimum bandwidth, preferred centre frequency, frequency band identification, transmit and/or receive level, identification number of the transmitting network node, identification number of the partner network node.

20. System according to one of claims 18 to 19, **characterised in that** the data transmission apparatuses (TRA1, TRA2, TRB1, TRB2) are embodied to use frequency shift keying as the data transmission method for the protective signal frequency channel, wherein signals outside a previously defined frequency range are processed as a protective signal and signals within the previously defined frequency range are processed as additional data.

## Revendications

1. Procédé pour la transmission de données sur une ligne moyenne ou haute tension, dans lequel des canaux de fréquences primaires (A1) sont utilisés pour la transmission de données entre un premier dispositif de transmission de données (TRA1) et un deuxième dispositif de transmission de données (TRB1) et une information d'occupation de canal de fréquence (SMB1) est transmise sur un canal de fréquence secondaire (MB1), **caractérisé en ce qu'**un troisième dispositif de transmission de données (TRA2) reçoit l'information d'occupation de canal de fréquence (SMB1) sur le canal de fréquence secondaire (MB1) et identifie une occupation d'un canal de fréquence primaire (A1) utilisé par le premier et le deuxième dispositif de transmission de données (TRA1, TRB1) et autorise ce canal de fréquence (A1) pour sa propre utilisation si l'intensité de signal de l'information d'occupation (SMB1) reçue par le troisième dispositif de transmission de données (TRA2) est inférieure à une première valeur seuil préalablement déterminée, et **en ce que** le troisième dispositif de transmission de données (TRA2) reçoit une autre information d'occupation de canal de fréquence (SMA1) sur un autre canal de fréquence secondaire (MA1), les deux informations d'occupation de canal de fréquence (SMA1, SMB1) étant émises respectivement par le premier ou le deuxième dispositif de transmission de données (TRA1, TRB1), et autorise ce canal de fréquence primaire (A1) pour sa propre utilisation si l'intensité de signal de la transmission de données sur l'autre canal de fréquence secondaire (MA1) est inférieure à une deuxième valeur seuil préalablement déterminée.

2. Procédé selon la revendication 1, **caractérisé en ce que** chacune des deux informations d'occupation de canal de fréquence (SMA1, SMB1) comportant, en plus de l'information relative à l'occupation du canal de fréquence primaire (A1) utilisé par le dispositif de transmission de données émetteur (TRA1, TRB1), une information d'occupation de canal de fréquence (SMA1, SMB1) sur le canal de fréquence primaire (A1) utilisé par le dispositif partenaire respectif, de sorte que même en cas de perturbation de la réception de l'un des deux canaux de fréquences secondaires (MA1, MB1) au niveau du troisième dispositif de transmission de données (TRA2), le troisième dispositif de transmission de données (TRA2) reçoit une information d'occupation relative à tous les canaux de fréquences primaires (A1) utilisés par le premier et le deuxième dispositif de transmission de données (TRA1, TRB1).

3. Procédé selon l'une des revendications précédentes, **caractérisé en ce que** le troisième dispositif de transmission de données (TRA2) émet une information d'occupation (SMA2) sur un autre canal de fréquence secondaire qui est reçu par le deuxième dispositif de transmission de données (TRB1) et **en ce que** le deuxième dispositif de transmission de données (TRB1) détermine l'intensité de signal de l'information d'occupation (SMA2) sur l'autre canal de fréquence secondaire et répond au troisième dispositif de transmission de données (TRA2) sur un canal de fréquence secondaire (SMB1), de sorte que le troisième dispositif de transmission de données (TRA2) autorise pour sa propre utilisation le canal de fréquence primaire (A1) utilisé par le premier et le deuxième dispositif de transmission de données (TRA1, TRB1) si l'intensité de signal de l'information d'occupation (SMA2) émise par le troisième dispositif de transmission de données (TRA2) est inférieure à une troisième valeur seuil préalablement déterminée.

4. Procédé selon l'une des revendications précédentes, **caractérisé en ce que** le premier et le deuxième dispositif de transmission de données (TRA1, TRB1) forment une première paire et le troisième et le quatrième dispositif de transmission de données (TRA2, TRB2) forment une deuxièmes paire, la deuxième paire (TRA2, TRB2) autorisant pour sa propre utilisation les canaux de fréquences primaires utilisés par la première paire (TRA1, TRB1) si l'intensité de signal des informations d'occupation (SMA1, SMB1) émises par la première paire est inférieure à une quatrième valeur seuil préalablement déterminée à la réception non seulement au niveau du troisième, mais aussi du quatrième dispositif de transmission de données (TRA2, TRB2).

5. Procédé selon l'une des revendications précédentes, **caractérisé en ce que** le canal de fréquence secondaire est exploité avec une puissance d'émission supérieure à la puissance d'émission respective des canaux de fréquences primaires.

6. Procédé selon l'une des revendications précédentes, **caractérisé en ce que** le canal de fréquence secondaire est exploité avec un procédé de transmission autre que les canaux de fréquences primaires, lequel produit une plus grande distance de la transmission de signal dans le canal de fréquence secondaire.

7. Procédé selon l'une des revendications précédentes, **caractérisé en ce que** le frequency shift keying est utilisé en tant que méthode de transmission de données pour le canal de fréquence secondaire.

8. Procédé selon l'une des revendications précédentes, **caractérisé en ce qu'**un canal de fréquence de signal de protection est utilisé en tant que canal de fréquence secondaire (MB1).

9. Procédé selon l'une des revendications précédentes, **caractérisé en ce que** sont transmises, sur le canal de fréquence secondaire (MB1), des données supplémentaires qui incluent au moins l'une des informations de qualité de réception de signal suivantes : niveau de réception, rapport signal-bruit, taux d'erreur sur les bits, taux d'erreur de bloc, niveau de bruit, type de modulation et/ou de codage de canal, format de message, fréquence limite inférieure/supérieure d'un canal de fréquence, fréquence centrale, largeur de bande, largeur de bande minimale, fréquence centrale préférentielle, identifiant de bande de fréquence, niveau d'émission et/ou de réception, numéro d'identification du nœud de réseau émetteur, numéro d'identification du nœud de réseau partenaire.

10. Procédé selon l'une des revendications 8 à 9, **caractérisé en ce que** le frequency shift keying est utilisé en tant que méthode de transmission de données pour le canal de fréquence de signal de protection, des signaux en dehors d'une plage de fréquence déterminée préalablement étant traités en tant que signal de protection et des signaux à l'intérieur de la plage de fréquence déterminée préalablement étant traités en tant que données supplémentaires.

11. Système de transmission de données sur une ligne moyenne ou haute tension, comportant un premier dispositif de transmission de données (TRA1) et un deuxième dispositif de transmission de données (TRB1) qui sont conçus pour utiliser des canaux de fréquences primaires (A1) pour la transmission de données et pour transmettre une information d'occupation de canal de fréquence (SMB1) sur un canal de fréquence secondaire (MB1), **caractérisé en ce qu'**est prévu un troisième dispositif de transmission de données (TRA2) qui est conçu pour recevoir l'information d'occupation de canal de fréquence (SMB1) sur le canal de fréquence secondaire (MB1) et pour identifier une occupation d'un canal de fréquence primaires (A1) utilisé par le premier et le deuxième dispositif de transmission de données (TRA1, TRB1) et pour autoriser ce canal de fréquence (A1) pour sa propre utilisation si l'intensité de signal de l'information d'occupation (SMB1) reçue par le troisième dispositif de transmission de données (TRA2) est inférieure à une première valeur seuil déterminée préalablement, et **en ce que** le troisième dispositif de transmission de données (TRA2) est en outre conçu pour recevoir une autre information d'occupation de canal de fréquence (SMA1) sur un autre canal de fréquence secondaire (MA1), les deux informations d'occupation de canal de fréquence (SMA1, SMB1) étant émises respectivement par le premier ou le deuxième dispositif de transmission de données (TRA1, TRB1), et le troisième dispositif de transmission de données (TRA2) étant conçu pour autoriser ce canal de fréquence primaire (A1) pour sa propre utilisation si l'intensité de signal de la transmission de données sur l'autre canal de fréquence secondaire (MA1) est inférieure à une deuxième valeur seuil déterminée préalablement.

12. Système selon la revendication 11, **caractérisé en ce que** le premier et le deuxième dispositif de transmission de données (TRA1,TRB1) sont conçus pour émettre chacune des deux informations d'occupation de canal de fréquence (SMA1, SMB1) en plus de l'information relative à l'occupation du canal de fréquence primaire (A1) utilisé par le dispositif de transmission de données émetteur (TRA1, TRB1) avec une information d'occupation de canal de fréquence sur le canal de fréquence primaire utilisé par le dispositif partenaire respectif, et **en ce que** le troisième dispositif de transmission de données (TRA2) est conçu pour recevoir, même en cas de perturbation de la réception de l'un des deux canaux de fréquences secondaires (SMA1, SMB1), une information d'occupation relative à tous les canaux de fréquences primaires (A1) utilisés par le premier et le deuxième dispositif de transmission de données (TRA1, TRB1).

13. Système selon l'une des revendications 11 à 12, **caractérisé en ce que** le troisième dispositif de transmission de données (TRA2) est conçu pour émettre une information d'occupation (SMA2) sur un autre canal de fréquence secondaire et le deuxième dispositif de transmission de données (TRB1) est conçu pour recevoir cette information d'occupation (SMA2) sur l'autre canal de fréquence secondaire et pour déterminer l'intensité de signal de l'information d'occupation (SMA2) et répondre au troisième dispositif de transmission de données (TRA2) sur un canal de fréquence secondaire (SMB1), et **en ce que** le troisième dispositif de transmission de données (TRA2) est conçu pour autoriser pour sa propre utilisation le canal de fréquence primaire (A1) utilisé par le premier et le deuxième dispositif de transmission de données (TRA1, TRB1) si l'intensité de signal de l'information d'occupation (SMA2) émise par le troisième dispositif de transmission de données (TRA2) est inférieure à une troisième valeur seuil déterminée préalablement.

14. Système selon l'une des revendications 11 à 13, **caractérisé en ce que** le premier et le deuxième dispositif de transmission de données (TRA1, TRB1) sont conçus pour former une première paire et le troisième et le quatrième dispositif de transmission de données (TRA2, TRB2) sont conçus pour former une deuxième paire, la deuxième paire (TRA2, TRB2) autorisant pour sa propre utilisation les canaux de fréquences primaires utilisés par la première paire (TRA1, TRB1) si l'intensité de signal des informations d'occupation (SMA1, SMB1) émises par la première paire est inférieure à une quatrième valeur seuil déterminée préalablement à la réception au niveau non seulement du troisième, mais aussi du quatrième dispositif de transmission de données (TRA2, TRB2).

15. Système selon l'une des revendications 11 à 14, **caractérisé en ce que** les dispositifs de transmission de données (TRA1, TRA2, TRB1, TRB2) sont conçus pour exploiter le canal de fréquence secondaire respectif (SMA1, SMB1, SMB2, SMA2) avec une puissance d'émission plus élevée que l'amplitude d'émission respective des canaux de fréquences primaires (A1, A2).

16. Système selon l'une des revendications 11 à 15, **caractérisé en ce que** les dispositifs de transmission de données (TRA1, TRA2, TRB1, TRB2) sont conçus pour exploiter le canal de fréquence secondaire avec un procédé de transmission autre que les canaux de fréquences primaires (A1, A2), lequel produit une plus grande distance de la transmission de signal dans le canal de fréquence secondaire.

17. Système selon l'une des revendications 11 à 16, **caractérisé en ce que** les dispositifs de transmission de données (TRA1, TRA2, TRB1, TRB2) sont conçus pour utiliser le frequency shift keying en tant que méthode de transmission de données pour le canal de fréquence secondaire.

18. Système selon l'une des revendications 11 à 17, **caractérisé en ce que** les dispositifs de transmission de données (TRA1, TRA2, TRB1, TRB2) sont conçus pour utiliser un canal de fréquence de signal de protection en tant que canal de fréquence secondaire (MB1).

19. Système selon l'une des revendications 11 à 18, **caractérisé en ce que** les dispositifs de transmission de données (TRA1, TRA2, TRB1, TRB2) sont conçus pour transmettre sur le canal de fréquence secondaire des données additionnelles qui incluent au moins l'une des informations de qualité de réception de signal suivantes : niveau de réception, rapport signal-bruit, taux d'erreur sur les bits, taux d'erreur de bloc, niveau de bruit, type de modulation et/ou de codage de canal, format de message, fréquence limite inférieure/supérieure d'un canal de fréquence, fréquence centrale, largeur de bande, largeur de bande minimale, fréquence centrale préférentielle, identifiant de bande de fréquence, niveau d'émission et/ou de réception, numéro d'identification du nœud de réseau émetteur, numéro d'identification du nœud de réseau partenaire.

20. Système selon l'une des revendications 18 à 19, **caractérisé en ce que** les dispositifs de transmission de données (TRA1, TRA2, TRB1, TRB2) sont conçus pour utiliser le frequency shift keying en tant que méthode de transmission de données pour le canal de fréquence de signal de protection, des signaux en dehors d'une plage de fréquence déterminée préalablement étant traités en tant que signal de protection et des signaux à l'intérieur de la plage de fréquence déterminée préalablement étant traités en tant que données supplémentaires.
